(19)

**Europäisches Patentamt**
**European Patent Office**
**Office européen des brevets**

(11) **EP 4 567 945 A1**

(12) **EUROPEAN PATENT APPLICATION**

(43) Date of publication:
**11.06.2025 Bulletin 2025/24**

(51) International Patent Classification (IPC):
***H01M 8/2404*** (2016.01)

(21) Application number: 24218397.8

(22) Date of filing: **09.12.2024**

(52) Cooperative Patent Classification (CPC):
**H01M 8/2404;** H01M 8/248; H01M 2008/1293

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.12.2023 US 202363607915 P
06.12.2024 US 202418971546**

(71) Applicant: **Bloom Energy Corporation
San Jose, CA 95134 (US)**

(72) Inventors:
- **BROWN, Wade
  San Jose 95134 (US)**
- **MACK, Jerome
  San Jose 95134 (US)**

- **GOTTMANN, Matthias
  San Jose 95134 (US)**
- **SEIKI, Elson
  San Jose 95134 (US)**
- **LYKAM, Steve
  San Jose 95134 (US)**
- **NALLABOLU, Madhuri
  San Jose 95134 (US)**
- **HOLM, Daniella
  San Jose 95134 (US)**
- **ROBERTSON, Andrew
  San Jose 95134 (US)**
- **PATEL, Siddharth
  San Jose 95134 (US)**

(74) Representative: **Wichmann, Hendrik
Wuesthoff & Wuesthoff
Patentanwälte und Rechtsanwalt PartG mbB
Schweigerstraße 2
81541 München (DE)**

(54) **METHOD OF SINTERING AN ELECTROCHEMICAL CELL STACK AND FURNACE FOR SINTERING THE ELECTROCHEMICAL CELL STACK**

(57)     A method of sintering an electrochemical cell stack includes placing the electrochemical cell stack in a cage which applies a first compressive load to the electrochemical cell stack, moving the cage containing the electrochemical cell stack in a moving direction through a furnace containing a sintering region, sintering the electrochemical cell stack in the sintering region of the furnace, and applying a second compressive load greater than the first compressive load to the electrochemical cell stack during the sintering.

FIG. 1

**Description**

**TECHNICAL FIELD**

The present disclosure is directed to a method of sintering an electrochemical cell stack and a furnace for sintering the electrochemical cell stack.

**BACKGROUND**

An electrochemical cell may be used to produce electrical energy from chemical energy and chemical energy from electrical energy. A fuel cell is an electrochemical device that can convert the chemical energy of a fuel (e.g., hydrogen or hydrocarbon fuel) and an oxidizing agent (e.g., air or oxygen) into electricity. An electrolysis cell is an electrochemical device that can use electricity to drive a chemical reaction (e.g., decomposition of water into hydrogen and oxygen). The electrochemical cells may be stacked into a column. The column may include one or more stacks of electrochemical cells.

**SUMMARY**

An embodiment of the present disclosure includes a method of sintering an electrochemical cell stack, comprising placing the electrochemical cell stack in a cage which applies a first compressive load to the electrochemical cell stack; moving the cage containing the electrochemical cell stack in a direction through a furnace comprising a sintering region; sintering the electrochemical cell stack in the sintering region of the furnace; and applying a second compressive load greater than the first compressive load to the electrochemical cell stack while sintering the stack in the sintering region.

An embodiment of the present disclosure includes a furnace including a furnace body including a sintering region; a pusher assembly configured to push one or more cages containing one or more electrochemical cell stacks to be sintered in the furnace body, wherein each cage is configured to apply a first compressive load to an electrochemical cell stack; and a compression assembly located in the sintering region of the furnace body and configured to apply a second compressive load greater than the first compressive load to the one or more electrochemical cell stacks.

**BRIEF DESCRIPTION OF THE DRAWINGS**

The accompanying drawings, which are incorporated herein and constitute part of this specification, illustrate examples of the disclosed devices and methods, and together with the general description given above and the detailed description given below, serve to explain the features of the invention.

FIG. 1 is a cross-sectional view of a furnace according to one or more embodiments.

FIG. 2A is a cross-sectional view of a cage according to one or more embodiments.

FIG. 2B is a perspective view of a cage according to one or more embodiments.

FIG. 3A is a perspective view of a cage at the beginning of a stack build according to one or more embodiments.

FIG. 3B is a perspective view of a cage near an end of the stack build according to one or more embodiments.

FIG. 3C is a cutaway perspective view of the cage of FIG. 3B.

FIG. 3D is a perspective view of a cage after the end of the stack build according to one or more embodiments.

FIG. 4A is a perspective view of a cage including a bottom electrochemical cell stack and a top electrochemical cell stack in the stack build state according to one or more embodiments.

FIG. 4B is a perspective view of a cage including a bottom electrochemical cell stack and a top electrochemical cell stack in a transport state according to one or more embodiments.

FIG. 4C is a perspective view of a cage including a bottom electrochemical cell stack and a top electrochemical cell stack in a sintering state according to one or more embodiments.

FIG. 5A is a perspective view of a cage including a stabilizing device having an alternative design according to one or more embodiments.

FIG. 5B is a perspective view of the stabilizing device of FIG. 5A in a disengaged state.

FIG. 5C is a cross-sectional view of the stabilizing device of FIGS. 5A and 5B in a disengaged state.

FIG. 5D is cross-sectional view of the stabilizing device of FIG. 5A in an engaged state.

FIG. 5E is a perspective view of a cage including the bottom electrochemical cell stack and a top electrochemical cell stack in a sintering state according to one or more embodiments.

FIG. 6A is a perspective view of a cage having a first alternative design according to one or more embodiments.

FIG. 6B is an exploded perspective view of a cage having a second alternative design according to one or more embodiments.

FIG. 7A is a cross-sectional view of a compression assembly in a disengaged state according to one or more embodiments.

FIG. 7B is a cross-sectional view of a compression assembly in an engaged state according to one or more embodiments.

FIG. 8 is a cross-sectional view of a compression assembly mounted on a linear stage according to one or more embodiments.

FIG. 9A is a cross-sectional view of a sealing member having a first alternative design according to one or more embodiments.

FIG. 9B is a cross-sectional view of a sealing member having a second alternative design according to one or more embodiments.

FIG. 10A is a cross-sectional view of a furnace according to one or more embodiments.

FIG. 10B is a plan view of the furnace of FIG. 10A according to one or more embodiments.

FIG. 11A is a perspective view of a guide platform including at least part of a gas flow system according to one or more embodiments.

FIG. 11B is a perspective view of a guide platform including gas troughs of a gas flow system according to one or more embodiments.

FIG. 11C is a cross-sectional view of a cage including a gas flow path of a gas flow system according to one or more embodiments.

FIG. 12 is a cross-sectional view of a compression assembly having an alternative design according to one or more embodiments.

FIGS. 13A - 13G illustrate cross sectional view of steps in a sintering method of one embodiment.

FIGS. 14A - 14E illustrate cross sectional view of steps in a sintering method of another embodiment.

FIGS. 15A and 15B are respective perspective and side cross-sectional views of a stabilizing device according to an alternative embodiment of the present disclosure.

FIGS. 15C, 15D and 15E are respective transparent side views of a cage containing the stabilizing device during respective first transport, sintering and second transport steps, according to the alternative embodiment of the present disclosure.

FIGS. 16A and 16B are respective perspective and side cross-sectional views of a cage containing a stabilizing device according to another alternative embodiment of the present disclosure.

FIGS. 17A and 17B are respective perspective and side cross-sectional views of a cage containing a stabilizing device according to yet another alternative embodiment of the present disclosure.

FIGS. 18A and 18B are perspective views of steps in a sintering method of another embodiment, and FIG. 18C is a plot of force applied to the stacks versus time during the steps shown in FIG. 18B.

FIG. 19 is a side cross-sectional view of steps in a sintering method of another embodiment.

FIG. 20 is a side cross-sectional view of a potential misalignment of a compression assembly and a cage of a comparative embodiment.

FIGS. 21A and 21B are perspective views of components of a capacitive displacement sensor according to an embodiment of the present disclosure.

FIGS. 22A and 22B are perspective and top views of a thermal uniformity measurement tool connected to stacks supported in cages, according to an embodiment of the present disclosure.

FIG. 23 is a perspective view of an optical temperature measurement system for the furnace of various embodiments of the present disclosure.

## DETAILED DESCRIPTION

Various embodiments in this disclosure will be described in detail with reference to the accompanying drawings. The drawings are not necessarily to scale and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

The electrochemical cell, such as a fuel cell, may include an anode, a cathode and an electrolyte between the anode and cathode that allows ions (e.g., hydrogen ions, oxygen ions, etc.) to move between the anode and cathode. The electrochemical cell may have substantially planar shape in which case the anode, the cathode and the electrolyte may be formed as layers in the electrochemical cell. This may allow a plurality of the electrochemical cells to be stacked together to form an electrochemical cell column which includes one or more electrochemical stacks (e.g., fuel cell stacks, electrolysis cell stacks, etc.).

The electrochemical cells in the electrochemical cell stack may be separated by interconnects. The interconnects may serve as gas flow separator plates that separate a gas at a first electrode (e.g., anode) of an electrochemical cell from a gas at a second electrode (e.g., cathode) of an adjacent electrochemical cell in the stack. The electrochemical cell stack may comprise a fuel cell stack or an electrolyzer cell stack, such as solid oxide fuel cell (SOFC) stack or a solid oxide electrolyzer cell (SOEC) stack.

In a SOEC stack, water (e.g., steam) may be provided to a first electrode of the SOEC through interconnect water channels and air may optionally be provided to the second electrode of the SOEC through the interconnect air channels. The water is separated into hydrogen and oxygen at the first electrode, and oxygen ions are transported from the first electrode through the electrolyte to the second electrode when a voltage or current is applied to the electrolyzer stack.

In a SOFC stack, the interconnect may operate as a gas-fuel separator that separates a fuel, such as a hydrocarbon or hydrogen fuel, flowing to the first electrode (e.g., fuel electrode, which is referred to as an anode) of one SOFC in the stack from an oxidant, such as air, flowing to the second electrode (e.g., air electrode which is referred to as a cathode) of an adjacent SOFC in the stack. At either end of the stack, there may be an air end plate or fuel end plate for providing air or fuel, respectively, to the end electrode. The main chemical reaction at an SOFC anode is the electrochemical oxidation of hydrogen (and CO) occurring at the interface of the electrode material in contact with the electrolyte. Hydrogen oxidation produces water and free electrons, which electrons are released to an external circuit. Oxidant fed to the cathode in the SOFC accepts electrons from the external circuit and undergoes a reduction reaction. The flow of electrons (from the anode to the cathode through the external circuit) produces direct current (DC) electricity. SOFC fuel cells are often arranged in stacks to increase the amount of DC power generated.

One or more embodiments of this disclosure may include a method of sintering an electrochemical cell stack and a furnace for sintering an electrochemical cell stack. One embodiment may include a ceramic cage that applies a first compressive load to the electrochemical cell stack during a sintering process. One embodiment may include a furnace including a sintering region and a compression assembly for applying a second compressive load greater than the first compressive load to the electrochemical cell stack in the sintering region. The second compressive load may be a single uniform load or a series of incremental loads greater than the first compressive load up to the second compressive load. One embodiment may include a pusher plate that transports the cage and includes a pusher plate manifold aligned with an anode inlet of the electrochemical cell stack. One embodiment may include a guide platform including a gas trough aligned with the pusher plate manifold. In one embodiment, a gas (e.g., nitrogen gas, compressed dry air (CDA), forming gas, etc.) may be flowed from the gas trough into the anode inlet of the electrochemical cell stack through the pusher plate manifold. Additional embodiments provide methods for sintering and conditioning electrochemical cells.

For purposes of this application, "sintering" includes processes for heating, melting, and/or reflowing glass or glass-ceramic seal precursor material(s), such as glass or glass-ceramic forming powders and/or glass or glass-ceramic layers in the stack to form glass or glass-ceramic seals between an electrochemical cell and two adjacent interconnects in the stack. Sintering may be performed at temperatures greater than 600 degrees Celsius, such as 600-1000 degrees Celsius, including 700-800 degrees Celsius, 800-900 degrees Celsius, 700-900 degrees Celsius, 900-950 degrees Celsius, and/or 950 - 1000 degrees Celsius.

Manufacturing electrochemical cell stacks may include heating the stack to sintering temperatures (e.g., in a range from about 600°C-1000°C), flowing high-purity inert gas (e.g., nitrogen gas) or a reducing gas (e.g., forming gas) through the stack to avoid oxidation of stack components, and subjecting the stack to a large compressive load. This process is typically conducted using an enclosed furnace where the electrochemical cell stack is stationary (a stationary furnace). Having the electrochemical cell stack stationary may require additional process cycle time, production time for equipment setup, and adds labor cost to the final product.

One or more embodiments of the present disclosure may include a sintering furnace in which the electrochemical cell stack is moving through the sintering furnace (e.g., continuous sintering furnace) during the sintering process. The sintering furnace may include a conveyance system to move the stack (or multiple stacks) through the furnace during sintering. The sintering furnace may include incremental compressive loading devices and intermittent direct gas delivery devices.

One or more embodiments of the sintering furnace may reduce process cycle time, production time and labor costs by having the electrochemical cell stack placed on a conveyance system that moves the stack through the sintering furnace. The sintering furnace may also reduce process variance (which may improve the total stack production yield) and may be more compact and have increased capital efficiency. In the continuous furnace, the temperature may increase from ambient temperature to sintering temperature and back to ambient temperature over the length of the furnace chamber (e.g., over the length of the conveyance system).

The sintering furnace may include three distinct regions (e.g., segments): a warm-up region, sintering region, and cool-down region. The warm-up region may start at the furnace entrance where the furnace temperature increases from ambient temperature to the sintering temperature. The sintering region may begin at the end of the warm-up region where the furnace temperature is held at the sintering temperature. The cool-down region may begin at the end of the sintering region and continue to the furnace exit. The temperature in the cool-down region may decrease from the sintering temperature to ambient temperature.

The conveyance system in the sintering furnace may carry the electrochemical cell stacks and move forward a set length (henceforth referred to as a pitch length) during a specified time (henceforth referred to as an index time). A move time encompasses the time during which the electrochemical cell stacks accelerate and decelerate. In one embodiment described below, the electrochemical cell stacks may move forward multiple times during the index time. In one embodiment, the sum of the time the conveyance system may be stationary (henceforth referred to as a dwell time) and the time it takes for the conveyance system to move forward (henceforth referred to as a move time) may be the index time of the conveyance system ($t_{index} = t_{move} + t_{dwell}$). Every period of one index time, a set amount of electrochemical cell stacks may be loaded onto the conveyance system near the entrance of the sintering furnace (e.g., the warm-up region) and a set amount of electrochemical cell stacks may be unloaded from the end of the sintering furnace (e.g., the cool-down region). The number of electrochemical cell stacks that can be loaded and unloaded after every period may depend on the desired production rate, as well as on the internal height and internal width of the sintering furnace. Likewise, the specific index time period may be determined by the desired production rate and number of electrochemical cell stacks loaded and unloaded during each cycle.

A sintering furnace with a specific index time and production rate may maintain a specified temperature gradient along the path that the electrochemical cell stacks travel through the sintering furnace. In one embodiment, the sintering furnace may keep the different atmospheric regions separate. The conveyance system of the sintering furnace may have electrochemical cell stacks placed on plates that slide along the path of the sintering furnace. Each plate may be in contact with adjacent plates such that when the plate closest to the entrance of the furnace is pushed forward, all plates in the furnace move forward (the plates move through the furnace in a synchronous manner). An external actuator may push the plate closest to the entrance of the furnace every cycle time for a movement time defined by the move time. The actuator may be stationary during the dwell time.

Operating the sintering furnace with a warm-up region, sintering region, and cool-down region may include several processing steps that are not used in stationary furnaces. First, compressed dry air (CDA) may be used to remove chemical byproducts, such as volatile organic compounds (VOCs) generated from heating the seal material in the warm-up and cool-down regions of the sintering furnace. For example, the seal material may include an organic binder and/or solvent that is used as a carrier for dispensing glass or glass ceramic seal inorganic precursor oxide materials into the stack. Second, flowing an inert gas, such as nitrogen, or a reducing gas, such as forming gas, through the electrochemical cell stack and/or by immersing the electrochemical cell stack in ultra-pure nitrogen once the electrochemical cell stack is at sintering temperature may be used to prevent or reduce oxidation of stack components. Third, variable intermittent compressive loads are applied to the electrochemical cell stack within the furnace in the sintering region. A low compressive load may be maintained on the stack at all times to prevent shifting within the stack. Once the electrochemical cell stack is at sintering temperature, a high compressive load may then be applied. Further, the high compressive load may be intermittently applied and removed at a controlled rate and/or also may be applied continuously as the stack height reduces during sintering. One or more embodiments of the present disclosure may implement these processing steps in a sintering furnace to produce sintered electrochemical cell stacks.

First, in the warm-up region of the sintering furnace, CDA may be flowed over the electrochemical cell stack to provide oxygen to increase (e.g., maximize) removal of VOCs in the warm-up region. The air oxidizes the VOCs to form water and carbon dioxide, which may be pumped out of the furnace. The air atmosphere in the warm-up region may be maintained until the stack reaches the point in the furnace where the local temperature may be in a range from 200°C-600°C. An eductor can be used to circulate the CDA within the furnace to further promote temperature uniformity.

Second, from the point in the warm-up region where the furnace atmosphere may be in a range from 200°C-600°C, the furnace atmosphere may be replaced with an inert gas, such as ultra-pure nitrogen and/or a noble gas (e.g., argon). In one embodiment, different regions of the furnace may comprise separate chambers which are separated from each other by one or more partitions, such as automatic doors. The inert gas (e.g., nitrogen) environment may be separated from the air environment using at least one automatic door between the CDA chamber (e.g., the warm-up chamber) and the inert gas chamber (e.g., the sintering chamber) of the furnace. The door may open every cycle to allow one or more stacks to pass through and may close after the stack(s) pass through. The door(s) may inhibit the flow of gases from the different furnace atmospheres in the different chambers from intermixing. Furthermore, the furnace may have areas enclosed by load lock doors that may be purged to reduce or prevent intermixing of different atmospheres. The nitrogen gas may also be maintained at a higher pressure than the CDA to prevent the CDA from entering the sintering chamber. The nitrogen environment may be maintained throughout the furnace until the temperature in the cool-down region may be in a range from 200°C to 500°C, at which point it is replaced with an air atmosphere. One or more additional automatic doors may be provided between the sintering chamber and the cool-down chamber. An eductor can be used to circulate the nitrogen within the furnace to further promote temperature uniformity.

To ensure that the electrochemical cell stack is saturated with inert gas, such as ultra-pure nitrogen, or a reducing gas, such as a forming gas, in one embodiment, the nitrogen may be preheated and distributed from underneath the pusher plates and flow through the fuel holes (i.e., fuel riser openings) which extend through the stack. The pusher plates (e.g., series of pusher plates) may act as a seal for the gas distribution and only allow gas to flow through the fuel holes in the stack. In an alternative embodiment, the inert gas may be provided into the stack through the load applicator device. In another embodiment, the entire sintering chamber may be flooded with the inert gas in addition to or instead of providing the inert gas into the fuel riser openings of the stacks.

Third, in the sintering region (e.g., sintering chamber), actuators (e.g., pneumatic actuators) may be spaced at every one pitch length. The actuators may be located outside the furnace and attached to a load applicator device, such as a ceramic rod, which can slide through a gas-tight seal into the furnace. The actuators may be used to apply a variable compressive load to the electrochemical cell stack during the dwell time in the sintering chamber. The compressive load applied during the dwell time may ramp up, hold, and ramp down to avoid damage to the cells in the stack. The actuators may be retracted before the conveyance system moves. In one embodiment, all of the electrochemical cell stacks may have constant load, such as a 1 lbm to 50 lbm mass, applied at all times to ensure that the seal material is confined to a desired region in the stack and that the stack does not lose compression or shift while moving through the sintering furnace (whether or not subject to additional compressive loading from the load applicator device).

Fourth, misalignment of the compressive load over the stack due to thermal expansion of the furnace may be mitigated by "center anchoring". Expansion of the sintering furnace may be split in two directions by the center anchoring and expansion in one direction may be avoided. This may decrease (e.g., minimize) the maximum misalignment in the regions furthest away from the anchoring point. In one embodiment, the actuators may be "flexibly mounted" to passively adjust for any misalignment. To further improve alignment of the compression rods to openings in the furnace housing, the alignment may be calibrated after the sintering section of the furnace stabilizes at operating temperature and furnace expansion settles.

In one embodiment, the electrochemical cell stacks may be placed in ceramic containers, such as ceramic cages, while the stacks are sintered in the furnace. In one embodiment, a ceramic ball may be located over a top block of the ceramic cage surrounding one or more stacks in the furnace to ensure that only the vertical component of the compressive load may be applied despite minor misalignment of the force application.

The compressive load application and release rate, dwell time under load at the sintering temperature, warm up rate, cool down rate and ambient gas purity in the sintering region of the furnace may be configured to help reduce (e.g., minimize) the footprint of the sintering furnace and make it cost effective while maintaining high production yields. One embodiment optimizes the dwell time at the sintering temperature under a high compressive load in order to reduce the number of actuators applying the variable compressive load. This reduces the footprint of the sintering furnace. In one embodiment, the dwell time duty cycle relative to the total index may be at least about 85%. In one embodiment the dwell time may be reduced by about 75% relative to sintering the stack in a stationary furnace.

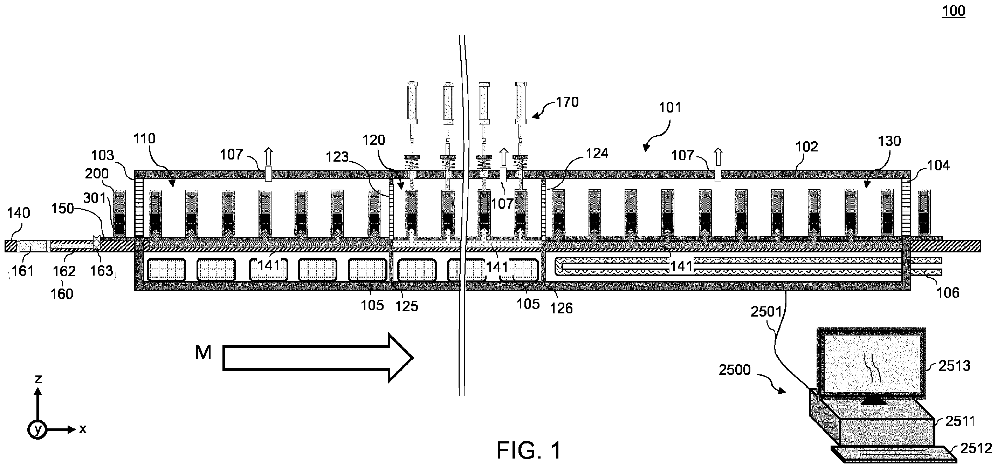

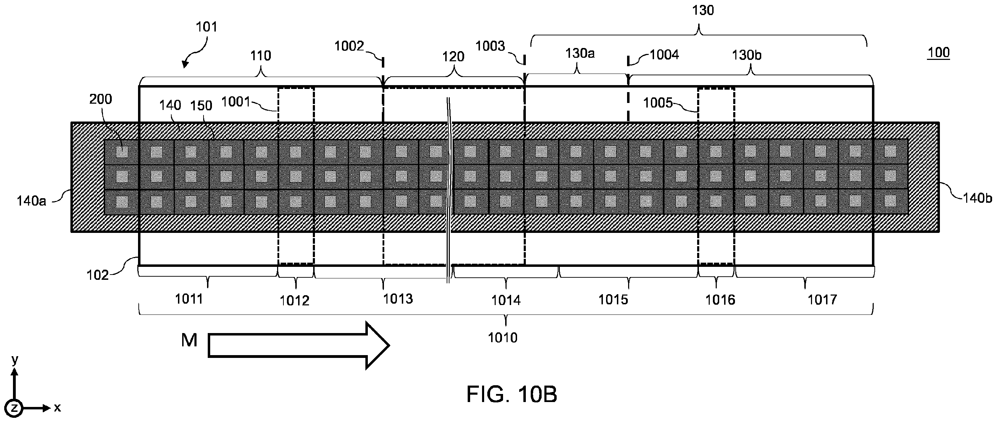

FIG. 1 is a cross-sectional view of a furnace 100 according to one or more embodiments. The furnace 100 may be referred to as a sintering furnace. In one embodiment, the sintering furnace 100 may be a so-called pusher furnace or index furnace. As illustrated in FIG. 1, the furnace 100 may include a furnace body 101. The furnace body 101 may have a hollow tube shape, such as rectangular tube shape, etc. The furnace body 101 may include a thermally resistant and thermally insulated furnace housing 102 comprising one or more walls, roof and/or floor. The furnace housing 102 of the furnace body 101 may be made of steel, ceramic or other suitable materials. The furnace body 101 may further include a furnace body entrance door 103 at an entrance end of the housing 102 of the furnace body 101 and a furnace body exit door 104 at an exit end of the housing 102 of the furnace body 101. In one embodiment, the furnace body 101 may have a linear horizontal shape (e.g., extend in a straight line, as shown in FIG. 10B). However, the furnace body 101 may have other shapes in alternative embodiments.

The furnace 100 may include three regions (e.g. chambers) including a warm-up region (e.g., chamber) 110, a sintering region (e.g., chamber) 120, and a cool-down region (e.g., chamber) 130. The furnace 100 may include a moving direction (M) from the warm-up region 110 to the cool-down region 130 through the sintering region. The furnace 100 may also include one or more heaters 105 for heating the warm-up region 110, the sintering region 120 and optionally the cool-down region 130. The heaters 105 may include, for example, one or more induction heaters, resistance heaters, radiative heaters (e.g., lamp heaters) or other suitable heaters. Although the heaters 105 are illustrated as being near the floor of the furnace housing 102, heaters 105 may also be positioned near the roof and/or walls of the furnace housing 102.

The heaters 105 may be arranged and/or controlled to provide a gradual increase in temperature in the warm-up region 110 in the moving direction M. In one embodiment, the heaters 105 may gradually heat the warm-up region 110 from an ambient temperature (e.g., about 25°C) to a sintering temperature in a range from 600°C-1100°C (e.g., 900°C - 1000°C). The rate of change of temperature (dT/dt) of one or more electrochemical cell stacks 301 in the warm-up region 110 may be in a range from 1°C/min to 5°C/min (e.g., about 2°C/min). For example, each position (e.g., heater 105 location) in the furnace 100 may be set to a target temperature. The target temperature at different positions may be different from each other.

The heaters 105 may be arranged and/or controlled to maintain the sintering temperature in the sintering region 120. In one embodiment, the heaters 105 may heat the sintering region 120 to a sintering temperature in a range from 600°C-1100°C (e.g., 900°C - 1000°C). The temperature in the sintering region 120 may be substantially uniform throughout the sintering region 120 (e.g., dT/dt=0). A length of the sintering region 120 may be greater than a minimum length required to accommodate heat transfer between the furnace 100 and the electrochemical cell stacks 301.

The cool-down region 130 may optionally include one or more cooling devices 106 such as cooling rings or cooling pipes. A coolant may be pumped through the cooling devices 106 in order to cool the cool-down region 130. The cooling devices 106 may gradually cool the cool-down region 130 from the sintering temperature to ambient temperature (e.g., about 25°C). The rate of change of temperature (dT/dt) in the cool-down region 130 may decrease in the moving direction M. In one embodiment, the rate of change of temperature (dT/dt) of one or more electrochemical cell stacks 301 in the cool-down region may be in a range from -1°C/min to -5°C/min. Although the cooling devices 106 are illustrated as being near the floor of the furnace housing 102, cooling devices 106 may also be positioned near the roof and/or walls of the furnace housing 102.

The furnace 100 may also include sensors (not shown) such as temperature sensors, pressure sensors and gas sensors in each of the warm-up region 110, sintering region 120 and cool-down region 130. The sensors may be used by a furnace control system 2500 for controlling an overall operation of the furnace 100. The furnace control system 2500 may be connected by a wired or wireless connection 2501 to the furnace 100. The furnace control system 2500 may include, for example, a dedicated logic integrated circuit or a computer 2511 (e.g., server) including one or more processors (e.g., central processing units (CPUs)) and one or more memory devices. The furnace control system 2500 may also include an input device 2512 (e.g., keyboard, mouse, etc.) for allowing an operator to input instructions, data, etc., into the furnace control system 2500. The furnace control system 2500 may also include a display device 2513 (e.g., a monitor or display screen) that may display data pertaining to control of the furnace 100. In an alternate embodiment, the display device 2513 of the furnace control system 2500 may comprise a touch screen monitor for purposes of entering input instructions, data, etc. If display device 2513 constitutes a touch screen, input device 2512 may not be necessary for the furnace control system 2500.

The furnace body 101 may include gas discharge ports 107 in the furnace housing 102. The gas discharge ports 107 may be opened so that gases, such as volatile organic compounds (VOCs), may be vented from each of the warm-up region 110, the sintering region 120 and optionally the cool-down region 130. The gas discharge ports 107 may optionally include one or more electronically controlled (or manually controlled) gas discharge valves (not shown) for opening and closing the gas discharge ports 107. The gas discharge ports 107 may be connected to a gas discharge line (not shown). In one embodiment, the gas discharge line may be connected to a vacuum device, such as a vacuum pump (not shown). The vacuum device may be activated to independently vent gases from each of the warm-up region 110, sintering region 120 and cool-down region 130.

The sintering region 120 may include a sintering chamber constituted by the housing 102 of the furnace body 101 and by sintering chamber walls 125, 126 located within the furnace body 101. The sintering chamber may separate the warm-up region 110 from the cool-down region 130. The sintering chamber walls 125, 126 may include a sintering chamber entrance door 123 at an entrance end of the sintering chamber and a sintering chamber exit door 124 at the exit end of the sintering chamber. The sintering chamber entrance door 123 and sintering chamber exit door 124 may form a substantially air-tight seal when closed.

The furnace 100 may further include a substantially rigid guide platform 140. The guide platform 140 may extend beyond the entrance end of the furnace body 101 and beyond the exit end of the furnace body 101. The guide platform 140 may be formed of steel, ceramic or other suitable thermally tolerant material. The guide platform 140 may also include a loading portion extending under the furnace body entrance door 103 and out of the entrance end of the furnace body 101. The guide platform 140 may also include an off-loading portion extending under the furnace body exit door 104 and out of the exit end of the furnace body 101.

The furnace 100 may include a plurality of pusher plates 150 that are configured to slide along an upper surface of the guide platform 140. The pusher plates 150 may be formed of steel, ceramic or other suitable thermally tolerant material. In one embodiment, the pusher plates 150 and guide platform 140 may have an interlocking configuration that allows the guide platform 140 to provide a guide a path for the pusher plates 150 in the moving direction M through the furnace body 101. In one embodiment, a surface of the pusher plates 150 and/or a surface of the guide platform 140 may be treated (e.g., coated) with a low friction coating to help ensure that the pusher plates 150 slide easily along the guide platform 140.

One or more electrochemical cell stacks 301 may be placed in a ceramic container, such as a cage 200, and the cage 200 may be placed on a pusher plate 150. The cage 200 may be used to maintain a proper alignment of the electrochemical cells and interconnects in the electrochemical cell stacks 301. The cage 200 may also be designed to apply a first (e.g., constant) compressive load to the electrochemical cell stacks 301. The pusher plate 150 with the cage 200 thereon may be pushed on the guide platform 140 through the furnace body 101. The edges of adjacent cages 200 (i.e., leading edge of one cage to the trailing edge of the next cage) in the furnace 100 may be separated by a distance in the moving direction M (e.g., the x-direction), with an exemplary distance in a range from about 40 mm to 120 mm (e.g., 60 mm to 90 mm).

The furnace 100 may further include a pusher assembly 160 for pushing the pusher plates 150 through the furnace body 101. The pusher assembly 160 may be mounted on or near the guide platform 140. The pusher assembly 160 may be mounted inside the furnace body 101 or outside the furnace body 101. In one embodiment, the pusher assembly 160 may be located at least partially inside the furnace body 101, but outside the housing 102. The pusher assembly 160 may include an actuator 161 (external actuator). The actuator 161 may include a pneumatic actuator or other suitable type of actuator. The pusher assembly 160 may further include a pusher rod 162 that is actuated by the actuator 161. The pusher assembly 160 may also include a contact plate 163 fixed to an end of the pusher rod 162.

When activated, the actuator 161 may push the pusher rod 162 away from the actuator 161 to push the contact plate 163 in the moving direction M. The contact plate 163 contacts a back end of a first pusher plate 150 and pushes the first pusher plate 150 (with the cage 200 thereon) in the moving direction M. A front end of the first pusher plate 150 may also contact a back end of a second pusher plate 150 so that the second pusher plate 150 is pushed in the moving direction by the first pusher plate 150. Each of the pusher plates 150 is in contact with a pusher plate 150 behind it and/or a pusher plate 150 in front of it in the moving direction M. With this arrangement, when the actuator 161 is activated to cause the contact plate 163 to push the pusher plate 150 in the moving direction M by a distance X, an entirety of the pusher plates 150 in the furnace body 101 are pushed in the moving direction M by the distance X. Although all pusher plates 150 move synchronously in this embodiment, designs with asynchronous movements of pusher plates are contemplated, understanding that additional pusher assemblies 160 will be required to account for such asynchronous movement.

As further illustrated in FIG. 1, the guide platform 140 may include gas troughs 141 in the warm-up region 110, the sintering region 120 and the cool-down region 130. The gas troughs 141 may be part of a furnace gas flow system that is included in the furnace 100. The gas troughs 141 may be used to supply gas to the electrochemical cell stacks during the sintering process. The gas troughs 141 may be connected to gas supply lines (e.g., air and inert gas lines) that transport gas from gas storage tanks (e.g., air and inert gas tanks) to the furnace 100. The gases in the gas troughs 141 may include, for example, compressed dry air (CDA) and/or nitrogen.

The gas troughs 141 in the warm-up region 110 may be connected to a CDA supply (not shown). The CDA supply may provide CDA from the gas troughs 141 through an opening in a pusher plate 150 and into the electrochemical cell stacks in each cage 200. The CDA may be flowed through the electrochemical cell stacks 301 (e.g., through the fuel riser openings in the stacks) and/or around the electrochemical cell stacks 301, and then exhausted out of the electrochemical cell stacks 301 and into the warm-up region 110 of the furnace 100.

The guide platform 140 may also include the gas troughs 141 in the sintering region 120 of the furnace 100. The gas troughs 141 in the sintering region may be connected to an inert gas supply, such as a nitrogen gas supply (not shown) or a reducing gas supply, such as a forming gas supply (not shown). The nitrogen gas supply may provide nitrogen gas (e.g., pure nitrogen gas) from the gas troughs 141 through an opening in the pusher plate 150 and into the electrochemical cell stacks 301 (e.g., through the fuel riser openings in the stacks) in each cage 200 in the sintering region. The nitrogen gas may also be flowed over the electrochemical cell stacks 301 and then exhausted out of the electrochemical cell stacks and into the sintering region 120 of the furnace 100.

The guide platform 140 may also include gas troughs 141 in the cool-down region 130 of the furnace 100. Similar to the gas troughs 141 in the warm-up region, the gas troughs 141 in the cool-down region 130 may be connected to a CDA gas supply or a reducing gas supply, such as forming gas supply. The gas supply may provide the CDA or forming gas from the gas troughs 141 in the cool-down region 130 through an opening in the pusher plate 150 and through and/or around the electrochemical cell stacks 301 in each cage 200. The CDA may then be exhausted out of the electrochemical cell stacks 301 and into the cool-down region 130 of the furnace 100.

The furnace 100 may further include one or more compression assemblies 170. The compression assemblies 170 may be located near the sintering region 120 of the furnace 100. The compression assemblies 170 may be designed to apply a second (e.g., intermittent) compressive force to the electrochemical cell stacks 301 in the cage 200 when the cage 200 is in the sintering region 120. The second compressive force may be greater than the first compressive force that is applied to the electrochemical cell stacks 301 by the cage 200. For example, the second compressive load may be 300 to 600 lbm, which is at least ten times greater than the first compressive load.

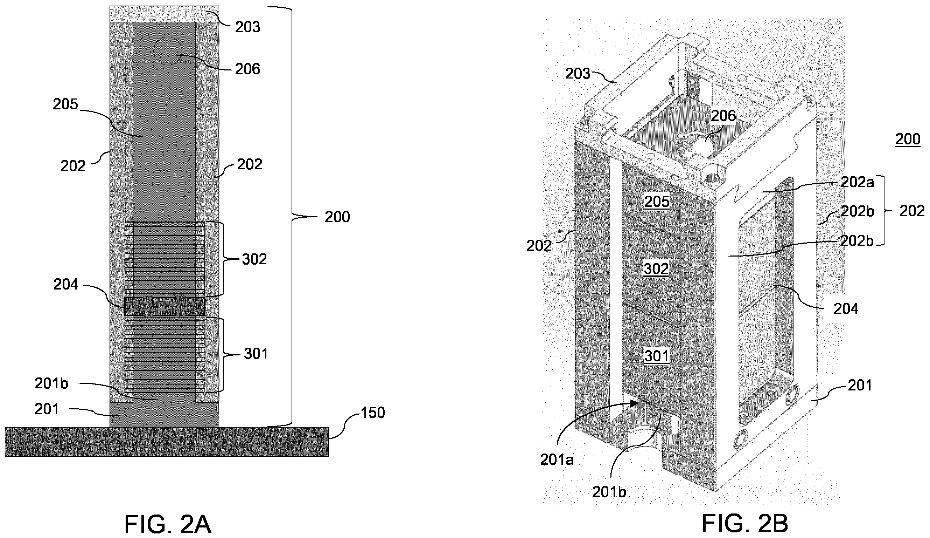

FIG. 2A is a cross-sectional view of a cage 200 according to one or more embodiments. FIG. 2B is a perspective view of a cage 200 according to one or more embodiments. The cage 200 may have a cuboid or rectangular cuboid shape. Other suitable shapes are within the contemplated scope of this disclosure. The cage 200 may include a cage base plate 201. The cage base plate 201 may be seated on the pusher plate 150 during the sintering process in the furnace 100. The cage 200 may also include a pair of cage side plates 202 (e.g., guide plates) mounted on the cage base plate 201. The cage side plates 202 may include, for example, a pair of corner guide rails 202b (e.g., angled L-shaped bars or pillars) extending upward from the corners of a side of the cage base plate 201. In particular, the cage side plates 202 may include a pair of corner guide rails 202b connected at their top ends by a horizontal rail 202a. The cage 200 may also include a cage top plate 203 fixed to an upper surface of the cage side plates 202 and a cage weight 205. The cage top plate 203 may have a frame shape so that an upper surface of the cage weight 205 may be exposed through the cage top plate 203. The cage 200 may have a height in a range from about 100 mm to 700 mm (e.g., 300 mm to 400 mm) and a width in a range from about 100 mm to 250 mm (e.g., 125 mm to 175 mm). Other cage height and widths are contemplated depending on the geometry of the electrochemical cell stacks 301 and 302 that are housed in the cage 200.

One or more electrochemical cell stacks may be placed in the cage 200. As illustrated in FIGS. 2A and 2B, a bottom electrochemical cell stack 301 may be seated on the cage base plate 201. A top electrochemical cell stack 302 may be located on the bottom electrochemical cell stack 301 and separated from the bottom electrochemical cell stack 301 by a cage spacer 204 (e.g., stack separator). The cage weight 205 is located on the top electrochemical cell stack 302. The cage weight 205 may apply a first compressive load (e.g., constant mass) to the top electrochemical cell stack 302 and the bottom electrochemical cell stack 301. The cage weight 205 may have a weight in a range from about 3 pounds to about 9 pounds. While two electrochemical cell stacks 301, 302 are shown, in alternative embodiments, one or more than two stacks may be placed in each cage 200.

The cage 200 may further include a compression protrusion, such as a compression ball 206 on the cage weight 205. The compression ball 206 may help to ensure that a second compressive load applied by the compression assembly 170 (see FIG. 1) is applied through the center of the top electrochemical cell stack 302 and the bottom electrochemical cell stack 301. Each of the bottom electrochemical cell stack 301, cage spacer 204, top electrochemical cell stack 302 and cage weight 205 may have a shape substantially conforming to an inside surface of the corner guide rails 202b of the cage side plates 202. In one embodiment, the corner guide rails 202b may constrain a movement (e.g., lateral movement) of the bottom electrochemical cell stack 301, cage spacer 204, top electrochemical cell stack 302 and cage weight 205.

The cage side plates 202 including the corner guide rails 202b may be comprised of any suitable ceramic material, such as aluminum oxide $Al_2O_3$ (i.e., alumina). The cage side plates 202 may be substantially comprised of alumina, such as 97% alumina. Alternatively, the cage side plates 202 may be comprised of less than 97% pure alumina, or more than 97% pure alumina, such as 97% to 98%, 98% to 99%, 99% to 99.5%, 99.5% to 100%, such as about 97%, about 98%, about 99%, or about 100%. Cage side plates 202 comprised of alumina may not yield at high temperatures, such as 800-950 degrees Celsius. Cage side plates 202 comprised of alumina do not electrically short circuit the electrochemical cell stacks because alumina is not electrically conductive. Moreover, alumina may lend itself to tight machining tolerances which may allow control over maximum stack tilt.

The cage base plate 201 may also be comprised of any suitable ceramic material, such as alumina, such as 97% pure alumina. Alternatively, the cage base plate 201 may be comprised of less than 97% pure alumina, or more than 97% pure alumina, such as 97% to 98%, 98% to 99%, 99% to 99.5%, 99.5% to 100%, such as about 97%, about 98%, about 99%, or about 100%. In an embodiment, the cage base plate 201 may include one or more gas interface openings (not shown) that may be aligned with a gas manifold (not shown) in the pusher plate 150. The openings may allow gases (e.g., CDA, nitrogen gas) to pass through the pusher plate 150 and the cage base plate 201. The openings may also be aligned with internal electrochemical cell stack 301 fuel riser channels to allow gases (e.g., CDA, nitrogen gas) to pass through the cage base plate 201 and into the electrochemical cell stack 301 fuel riser channels. In an embodiment, the cage base plate 201 may include channels or grooves (not shown) on the upper surface of the cage base plate 201. The cage base plate 201 may include a flat landing surface 201b containing one or more recesses 201a. The cage base plate 201 is configured to support both the cage side plates 202 while the landing surface 201b is configured to support the electrochemical cell stacks 301 placed over the cage base plate 201, as will be described below.

The cage spacer 204 may also be comprised of any suitable ceramic, such as alumina, such as 97% pure alumina. Alternatively, the cage spacer 204 may be comprised of less than 97% pure alumina, or more than 97% pure alumina, such as 97% to 98%, 98% to 99%, 99% to 99.5%, 99.5% to 100%, such as about 97%, about 98%, about 99%, or about 100%. In an embodiment, the cage spacer 204 may include channels or grooves (not shown) on the upper surface and lower surface of the cage spacer 204. In an embodiment, the cage spacer 204 may include one or more gas interface openings (not shown) that may pass through the cage spacer 204 and line up with internal electrochemical cell stack 301, 302 fuel riser channels. In an optional embodiment, the cage spacer 204 may be configured to act as a separator between multiple stacks 301, 302 of electrochemical cells within the cage side plates 202. If only one stack (or column) 301 is provided per cage 200, then the cage spacer 204 may be omitted.

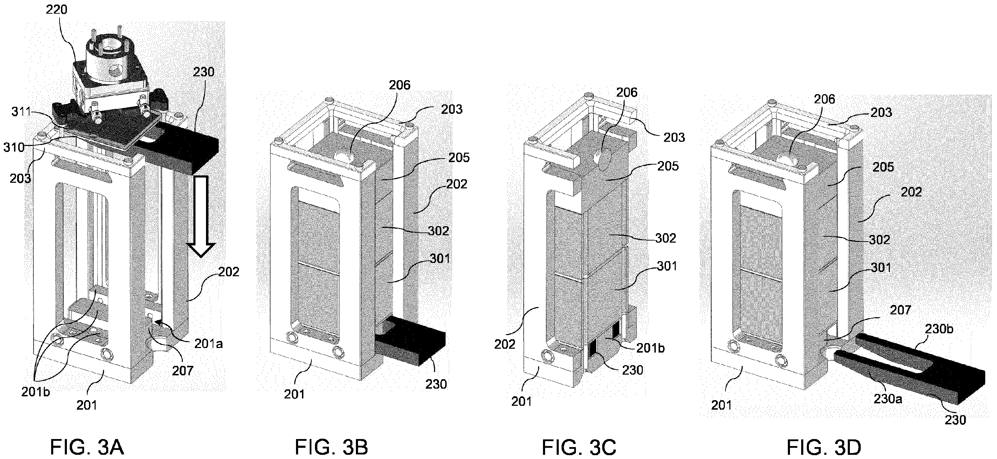

FIGS. 3A - 3D are perspective views of a cage 200 in a stack build state according to one or more embodiments. In particular, FIG. 3 A is a perspective view of a cage 200 at the beginning of a stack build according to one or more embodiments. FIG. 3B is a perspective view of a cage 200 near an end of the stack build according to one or more embodiments. FIG. 3C is a perspective cutaway view of FIG. 3D. FIG. 3D is a perspective view of a cage 200 after the end of the stack build according to one or more embodiments

As illustrated in FIG. 3A, the cage 200 may be designed so that electrochemical cell stacks (e.g., bottom electrochemical cell stack 301 and top electrochemical cell stack 302) may be built directly in the cage 200. At the beginning of the stack build, a build platform 230 may be inserted between the cage side plates 202. The build platform 230 may have a tuning fork shape containing prongs 230a and 230b. The build platform 230 may be attached to a vertical stage in the cage 200. A build robot 220 (e.g., electromechanical pick and place machine) may pick up individual electrochemical cells and interconnects and alternately place them on the build platform 230 through the top of the cage 200. In one embodiment, the build robot 220 may include a gripper that allows the build robot 220 to grip the electrochemical cells 310 and interconnects 311. The glass or glass ceramic seal precursor material is also dispensed on each cell and/or interconnect placed into the cage 200.

As illustrated in FIG. 3A, the build platform 230 may index down (indicated by the directional arrow) as each of the electrochemical cells 310 and interconnects 311 is placed in the cage 200 until the electrochemical cell stack is fully built in the cage 200 (as shown in FIGS. 3B and 3C). After the electrochemical cell stack 301 and/or 302 is built in the cage 200, the cage weight 205 may be inserted by the build robot 220 into the cage 200. At this point in the assembly, the prongs 230a and 230b of the build platform 230 may be located in the recesses 201a in the landing surface 201b of the base plate 201. In one embodiment, the middle portion of the landing surface 201b may comprise a top surface of a support rail 207. Subsequently, the prongs 230a and 230b of the build platform 230 may be laterally pulled out of the recesses 201a, as shown in FIG. 3D.

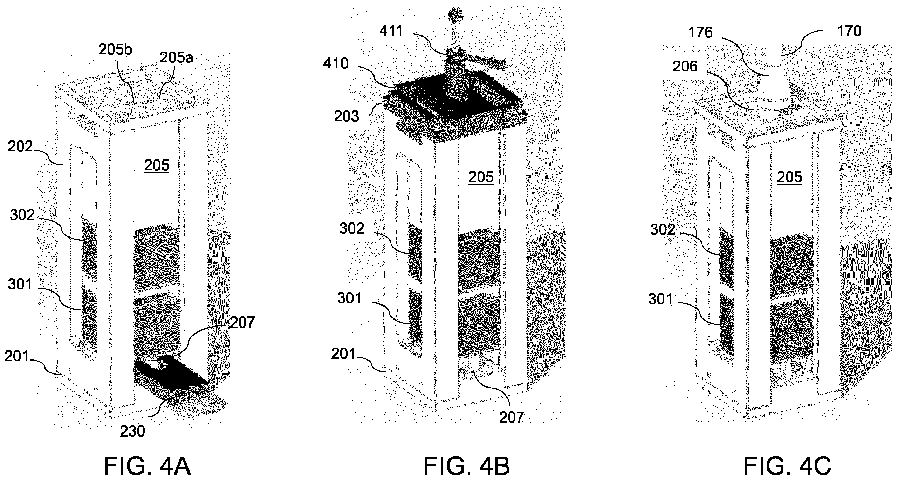

FIGS. 4A-4C are perspective views of the cage 200 including the bottom electrochemical cell stack 301 and top electrochemical cell stack 302 in different states according to one or more embodiments. In one embodiment, the bottom electrochemical cell stack 301 and top electrochemical cell stack 302 may be built in the cage 200 at one location. The cage 200 may then be transported to a different location of the furnace 100 for sintering. In particular, FIG. 4A is a perspective view of the cage 200 including the bottom electrochemical cell stack 301 and top electrochemical cell stack 302 in the stack build state according to one or more embodiments. The cage weight 205 may also be inserted into the cage 200 to apply the first compressive load to the bottom electrochemical cell stack 301 and top electrochemical cell stack 302. As illustrated in FIG. 4A, a top surface 205a of the cage weight 205 may include a recess 205b that may be used to support a compression ball 206. At this point, after the bottom electrochemical cell stack 301 and top electrochemical cell stack 302 are built, the build platform 230 may be removed from the cage 200.

FIG. 4B is a perspective view of the cage 200 including the bottom electrochemical cell stack 301 and top electrochemical cell stack 302 in a transport state according to one or more embodiments. As illustrated in FIG. 4B, after the build platform 230 is removed, the bottom electrochemical cell stack 301 is supported by the support rail 207 which comprises a portion of the cage base plate 201 or is located on the cage base plate 201. The support rail 207 fits between the two elongated prongs 230a, 230b of the tuning fork shaped build platform 230. The build platform 230 may be pulled out sideways from the cage 200 without disturbing the bottom electrochemical cell stack 301 located on the support rail 207.

A stabilizing device 410 may be attached to the cage top plate 203. The stabilizing device 410 may include a pressing member 411 (e.g., screw-down mechanism) that may allow the stabilizing device 410 to apply a pressing force down onto the cage weight 205 to substantially secure the cage weight 205, bottom electrochemical cell stack 301 and top electrochemical cell stack 302 in a fixed position. The cage 200 containing at least one of electrochemical cell stack 301 and the stabilizing device 410 is transported from the build area to the furnace 100. The stabilizing device 410 is removed from the cage 200 after the transport is completed and the cage and its contents are prepared for processing in the furnace 100.

FIG. 4C is a perspective view of the cage 200 including the bottom electrochemical cell stack 301 and top electrochemical cell stack 302 in a sintering state according to one or more embodiments. As illustrated in FIG. 4C, after the cage 200 has been transported to the furnace 100, the stabilizing device 410 may be removed. The compression ball 206 may then be placed in the recess 205b. At this point, the cage 200 is placed into the furnace 100 and moved into the sintering region 120 of the furnace 100. A contact pad 176 of the compression assembly 170 presses down on the compression ball 206 to apply the second compressive load during the sintering step.

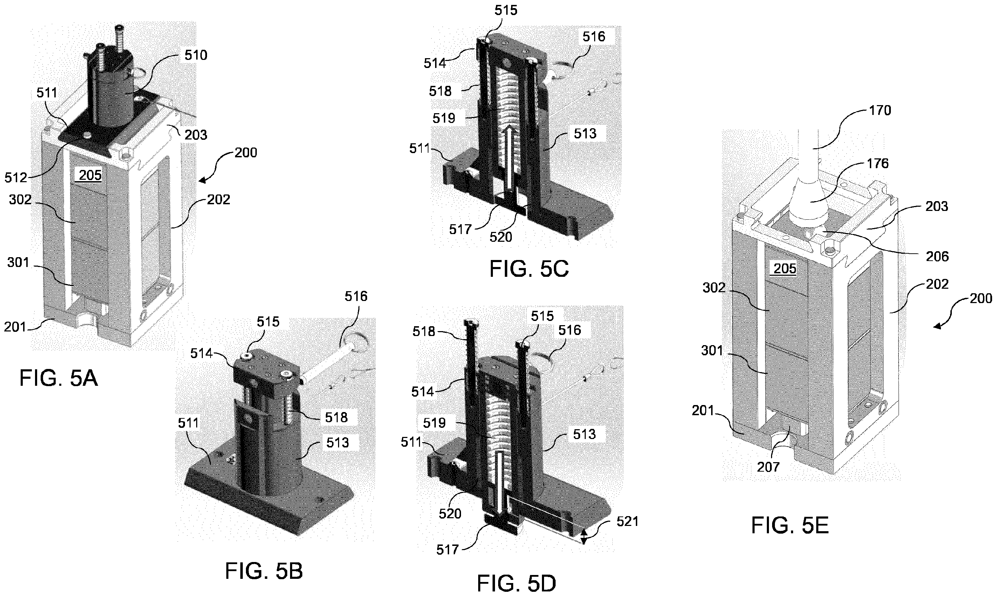

FIGS. 5A-5D are various views of the stabilizing device 510 having an alternative design according to one or more embodiments. The stabilizing device 510 may be used during the transport of the cage 200 containing one or more electrochemical stacks 301 from the build area to the furnace 100. In particular, FIG. 5A is a perspective view of the cage 200 including the stabilizing device 510 having the alternative design according to one or more embodiments. As illustrated in FIG. 5A, the stabilizing device 510 with the alternative design may include a base plate 511 secured to the cage top plate 203 by one or more fastening members 512 (e.g. pins). The stabilizing device 510 of FIG. 5A is shown in the engaged state in which the stabilizing device 510 provides downward pressure on the electrochemical cell stacks 301, 302 located in the cage 200 below the stabilizing device 510.

FIG. 5B is a perspective view of the stabilizing device 510 of FIG. 5A in the disengaged state. As illustrated in FIG. 5B, the stabilizing device 510 may further include an outer cylinder (e.g., device housing) 513 fixed to the base plate 511. The stabilizing device 510 may further include an inner cylinder (e.g., spring housing) 514 that is axially movable inside the outer cylinder 513. The stabilizing device 510 may also include one or more spring rods 515 connected to the outer cylinder 513 and extending through openings in the inner cylinder 514. Lift springs 518 may be provided around the spring rods 515. The stabilizing device 510 may also include a locking pin 516 that may be inserted through holes in the inner cylinder 514 and outer cylinder 513 to lock the inner cylinder 514 in the engaged position relative to the outer cylinder 513.

FIG. 5C is a cross-sectional view of the stabilizing device 510 of FIGS. 5A and 5B in the disengaged state. As illustrated in FIG. 5C, the stabilizing device 510 may further include an alignment plate 517 connected to an end of the inner cylinder 514 and a compression spring 519 located over the alignment plate 517 in the inner cylinder 514. A bushing 520 may be located between the inner cylinder 514 and the outer cylinder 513 in the lower portion of the stabilizing device 510. To place the stabilizing device in a disengaged ("compression off") state shown in FIGS. 5B and 5C, the locking pin 516 is retracted from the inner and outer cylinders. This causes the compression spring 519 to lift up the inner cylinder 514 relative to the outer cylinder 513 and the base plate 511. This causes the stabilizer plate 517 (which is connected to the inner cylinder 514) to lift up and release the electrochemical cell stack(s) 301, 302 located in the cage 200 below.

FIG. 5D is a cross-sectional view of the stabilizing device 510 of FIG. 5A in the engaged state. As illustrated in FIG. 5D, an external force is applied to the inner cylinder 514 to push the inner cylinder 514 down relative to the outer cylinder 513 and the base plate 511. The locking pin 516 is then inserted into the openings in the inner and outer cylinders to lock the inner cylinder 514 in the engaged ("compression on") state relative to the outer cylinder 513 and the base plate 511. This causes the alignment plate 517 to engage with the electrochemical cell stack(s) 301, 302 in the underlying cage 200, as shown in FIGS. 5A and 5D. The compression spring 519 applies downward pressure on the alignment plate 517, which in turn applies the downward pressure (i.e., compression) on the electrochemical cell stack(s) 301, 302 in the underlying cage 200. A gap 521 may be located above the alignment plate 517.

FIG. 5E is a perspective view of the cage 200 including the bottom electrochemical cell stack 301 and top electrochemical cell stack 302 in a sintering state according to one or more embodiments. As illustrated in FIG. 5E, after the cage 200 has been transported to the furnace 100, the stabilizing device 510 may be removed. At this point, the cage 200 is placed into the furnace 100 and moved into the sintering region 120 of the furnace 100. The contact pad 176 of the compression assembly 170 presses down on the compression ball 206 to apply the second compressive load during the sintering step.

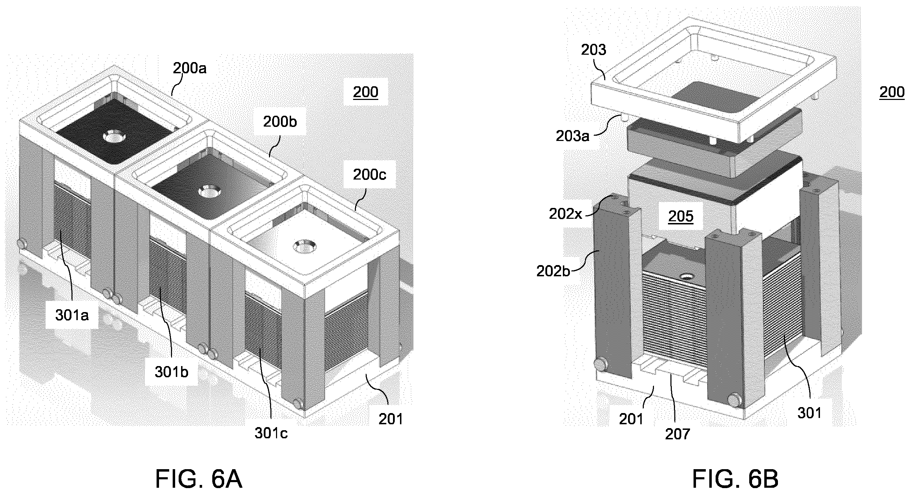

FIGS. 6A and 6B are perspective views of the cage 200 having alternative designs according to one or more embodiments. In particular, FIG. 6A is a perspective view of the cage 200 having a first alternative design according to one or more embodiments. As illustrated in FIG. 6A, the first alternative design of the cage 200 may have a 1 x 3 configuration. The cage 200 may include an elongated cage base plate 201 and three cage portions 200a, 200b and 200c supported by the elongated cage base plate 201. Each cage portion 200a, 200b and 200c is configured to support a respective electrochemical cell stack 301a, 301b and 301c.

FIG. 6B is an exploded perspective view of the cage 200 having a second alternative design according to one or more embodiments. In the second alternative design, the cage 200 may have a 1 x 1 design configured to support a single electrochemical cell stack 301. The cage weight 205 may be seated on the electrochemical cell stack 301. The cage top plate 203 may include one or more peg portions 203a extending from the bottom of the cage top plate 203. The cage 200 may also include corner guide rails 202b that may include one or more openings 202x (e.g., holes, recesses, etc.) that are substantially aligned with the one or more peg portions 203a, respectively. The peg portions 203a may be inserted into the openings 202x, respectively, to assist in securing the cage top plate 203 to the corner guide rails 202b.

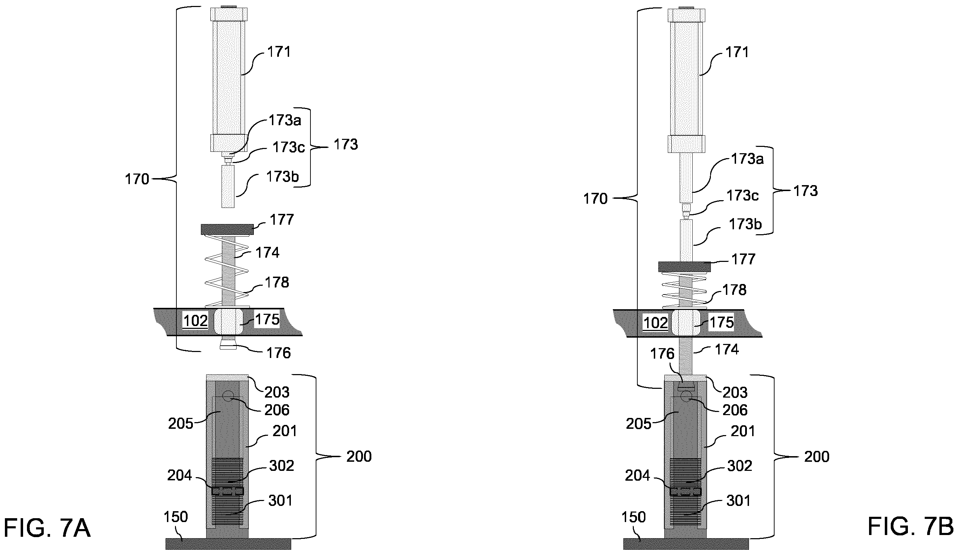

FIGS. 7A and 7B are cross-sectional views of the compression assembly 170 according to an embodiment. In particular, FIG. 7A is a cross-sectional view of the compression assembly 170 in a disengaged state according to one or more embodiments. FIG. 7B is a cross-sectional view of the compression assembly 170 in an engaged state according to one or more embodiments.

As illustrated in FIG. 7A, the compression assembly 170 may include an actuator 171 (e.g., pneumatic actuator) and a compression rod 174 decoupled from the actuator 171. The actuator 171 may be located outside the furnace body 101 (e.g., outside the housing 102) and may also be referred to as an "external actuator." The actuator 171 may be fixed in position relative to the furnace body 101. The compression assembly 170 may also include an actuator rod 173 that is actuated by the actuator 171. The actuator rod 173 may include an upper rod portion 173a, a lower rod portion 173b and a connecting member 173c that joins/couples the upper rod portion 173a to the lower rod portion 173b. As illustrated in FIG. 7A, in the disengaged state, the upper rod portion 173a may be drawn into the actuator 171. The compression assembly 170 may be in the disengaged state (e.g., the actuator rod 173 raised), for example, during a move time (e.g., when the pusher plates 150 supporting the cages 200 are being pushed by the pusher assembly 160).

The compression rod 174 may extend through a sealing member 175 (e.g., sealing gasket) in an opening in the housing 102 of the furnace body 101. The sealing member 175 may form a gas-tight seal in the opening. The sealing member 175 may be formed, for example, of ceramic fiber (e.g., ceramic wool) or flexible graphite. Other suitable materials are within the contemplated scope of disclosure. The compression rod 174 may be formed of ceramic or other thermally resistant materials. A contact pad 176 may be attached to a lower end of the compression rod 174. The contact pad 176 may have a semicircular groove in its bottom surface such that the compression ball 206 fits into the groove. A contact plate 177 may be attached to an upper end of the compression rod 174.

A biasing member 178 (e.g., spring) may be formed around the compression rod 174 between the housing 102 of the furnace body 101 and the contact plate 177. As illustrated in FIG. 7A, in the disengaged state, the biasing member 178 may cause the upper portion of the compression rod 174 to be retracted out of the housing 102 of the furnace body 101. A lower portion of the compression rod 174 including the contact pad 176 may remain inside the housing 102 of the furnace body 101 (e.g., inside the sintering region 120) in the disengaged state.

As illustrated in FIG. 7B, in the engaged state of the compression assembly 170, the actuator 171 forces the actuator rod 173 out of the actuator 171 toward the contact plate 177. The lower rod portion 173b may contact the contact plate 177 and force the lower portion of the compression rod 174 into the furnace body 101 (e.g., into the sintering region 120) against the biasing force of the biasing member 178. The length of the compression rod 174 may be precisely set so that the contact pad 176 contacts the compression ball 206 with enough force to apply the second compressive load to the bottom electrochemical cell stack 301 and to the top electrochemical cell stack 302 located in the cage 200. The compression assembly 170 may be in the engaged state (e.g., the actuator rod 173 lowered), for example, during a ramp time and dwell time (e.g., when the pusher plates 150 supporting the cages 200 are not being pushed by the pusher assembly 160). In one embodiment, a temperature of the electrochemical cell stacks (e.g., bottom electrochemical cell stack 301 and top electrochemical cell stack 302) may be at least at the sintering temperature (e.g., at least 600oC) before the compression assembly 170 is activated.

In at least one embodiment, the furnace 100 and/or compression assembly 170 may be designed to mitigate a risk of misalignment between the actuator rod 173 and the compression rod 174. Generally, misalignment may occur, for example, due to thermal expansion of the furnace 100, and to a lesser extent due to manufacturing stack tolerances. In particular, the furnace 100 may expand from heat-up to the sintering temperature. For a long furnace 100 (e.g., over a hundred feet long), the amount of the expansion could be quite significant.

Misalignment may occur in the form of lateral misalignment where an axial direction of the compression rod 174 is parallel to but not aligned with an axial direction of the actuator rod 173. Misalignment may also occur in the form of angular misalignment where an axial direction of the compression rod 174 is formed at an angle with respect to an axial direction of the actuator rod 173.

In at least one embodiment, to mitigate the risk of misalignment (e.g., reduce the risk of failure of the compression assembly 170 due to misalignment), the actuator 171 may be mounted on a structure anchored directly to the floor (e.g., separate from the furnace 100 which may also be anchored directly to the floor). The contact plate 177 may also help to mitigate the risk of misalignment. The contact plate 177 in the compression assembly 170 may include a significantly greater area than a cross-section of the compression rod 174. In one embodiment, an area of the contact plate 177 may be at least twice the area of the cross-section of the compression rod 174. The relatively large area of the contact plate 177 may help to ensure that the actuator rod 173 actuates the compression rod 174 (e.g., help to avoid a failure of the compression assembly 170) notwithstanding misalignment (e.g., lateral misalignment or angular misalignment) between the actuator rod 173 and the contact plate 177.

Misalignment may increase with distance from the anchoring point of the furnace body 101. Therefore, to further mitigate the risk of misalignment, the furnace body 101 may be anchored to the floor at a center point of the furnace body 101 in the lengthwise direction. This may be referred to as center anchoring the furnace body 101. By center anchoring the furnace body 101, misalignment between actuator rod 173 and the contact plate 177 may be about one half of the misalignment realized when the furnace body 101 is anchored to the floor at an end (e.g., edge) of the furnace body 101 in the lengthwise direction.

The connecting member 173c in the actuator rod 173 may help to mitigate both lateral misalignment and angular misalignment. The connecting member 173c may include, for example, a floating joint or an axial shaft coupler. Other suitable types of connecting members are within the contemplated scope of this disclosure. The connecting member 173c (e.g., the floating joint, the axial shaft coupler, etc.) may help to ensure that the actuator rod 173 applies the second compressive load to the bottom electrochemical cell stack 301 and the top electrochemical cell stack 302 even in the event of lateral misalignment or angular misalignment.

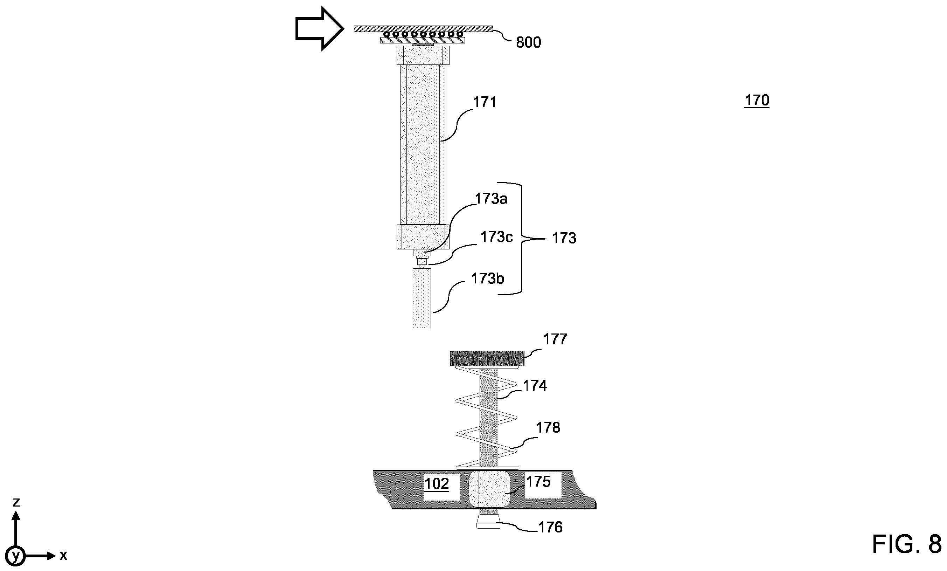

FIG. 8 is a cross-sectional view of the compression assembly 170 mounted on a linear stage (e.g., actuator positioner) 800 according to one or more embodiments. To further mitigate misalignment (e.g., lateral misalignment and angular misalignment), the actuator 171 (e.g., pneumatic actuator) of the compression assembly 170 may be mounted on a linear stage 800. The linear stage 800 may move back and forth in the x-direction (e.g., the moving direction M) in order account for movement of the compression rod 174 in the x-direction due to thermal expansion. The linear stage 800 may have a range of operation that is sufficient to accommodate thermal expansion of the furnace 100. The linear stage 800 may be rated for an axial load of at least 2000N.

In one embodiment, a sensor may be used to detect movement of the compression rod 174 and the amount of movement in the x-direction. The linear stage 800 may then be moved by the same amount in the x-direction. This may help to ensure that the actuator rod 173 is substantially aligned with the compression rod 174. Alternatively, the actuator 171 mounted on the stage 800 may passively move with the opening in the furnace 100 as opposed to just being decoupled from the compression rod 174. In one embodiment, one or more guide pins, may be provided in the furnace 100 to engage with guide holes in the pusher plates 150 to align the pusher plates 150 under the compression rod 174. In one embodiment, the guide pins may comprise two cone head pins located in the furnace 100 to the side of and/or under the pusher plates 150. The guide pins may be moved by guide pin actuators to move the guide pins into guide holes (e.g., circular and slotted guide holes) on the side and/or bottom of the pusher plates 150 once the pusher plates 150 stop moving. The guide pins are retracted from the guide holes by the guide pin actuators before the pusher plates 150 are moved in the moving direction in the furnace 100.

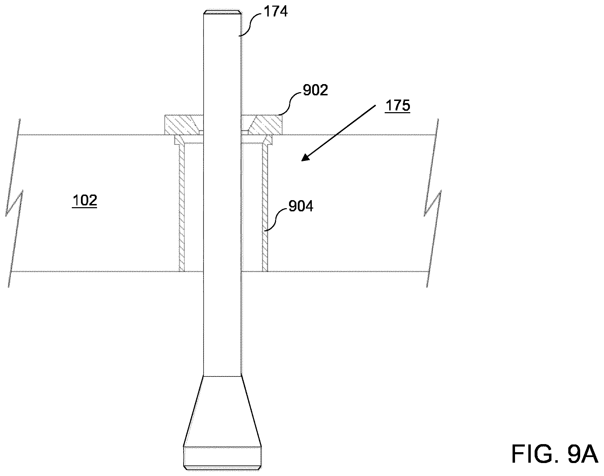

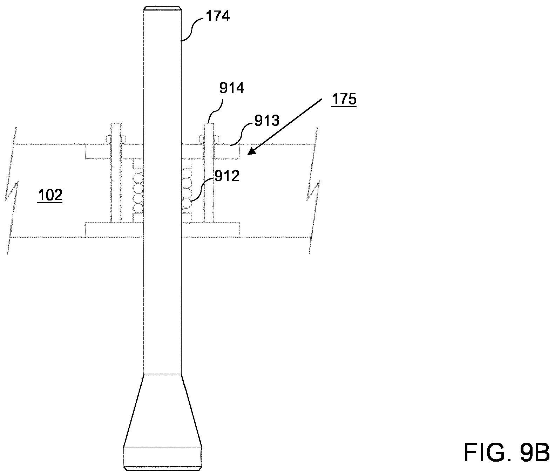

FIGS. 9A and 9B are cross-sectional views of alternative designs of the sealing member 175 according to one or more embodiments. In particular, FIG. 9A is a cross-sectional view of the sealing member 175 having a first alternative design according to one or more embodiments. FIG. 9B is a cross-sectional view of the sealing member 175 having a second alternative design according to one or more embodiments. The sealing member 175 may be designed such that the compression rod 174 is able to shift (e.g., laterally shift in the x-direction) in position. Allowing for shifting in the sealing member 175 may allow the sealing member 175 to accommodate some amount of thermal expansion.

The sealing member 175 having the first alternative design in FIG. 9A may include a bushing 902 on an upper surface of the furnace housing 102. The bushing 902 may be configured to seal the opening in the furnace housing 102. The sealing member 175 may also include a tube 904 connected to the bushing 902. A layer of ceramic fiber (e.g., ceramic wool) (not shown) may be formed around the bushing 902 outside the furnace 100 to help seal the opening in the furnace housing 102. In this case, the second compressive load may be applied by the compression rod 174 by forcing the compression rod 174 through the bushing 902 and tube 904 of the sealing member 175 into the sintering region 120 of the furnace 100.

The sealing member 175 having the second alternative design in FIG. 9B may include a compression coil 912 configured to seal the opening in the furnace housing 102. The compression coil 912 may be formed, for example, of ceramic fiber (e.g., ceramic wool or ceramic rope) wound around the compression rod 174. A top and bottom of the compression coil 912 may be attached to a pair of plates 913 (e.g., ceramic plates). The plates 913 may be pressed to a top and bottom of the furnace housing 102, respectively, and compress the compression coil 912. The plates 913 may be secured in place by one or more fastening members 914 (e.g., bolts) that may serve as a compression fitting. In this case, the second compressive load may be applied by the compression rod 174 by forcing the compression rod 174 through the compression coil 912 and the plates 913 of the sealing member 175 into the sintering region 120 of the furnace 100.

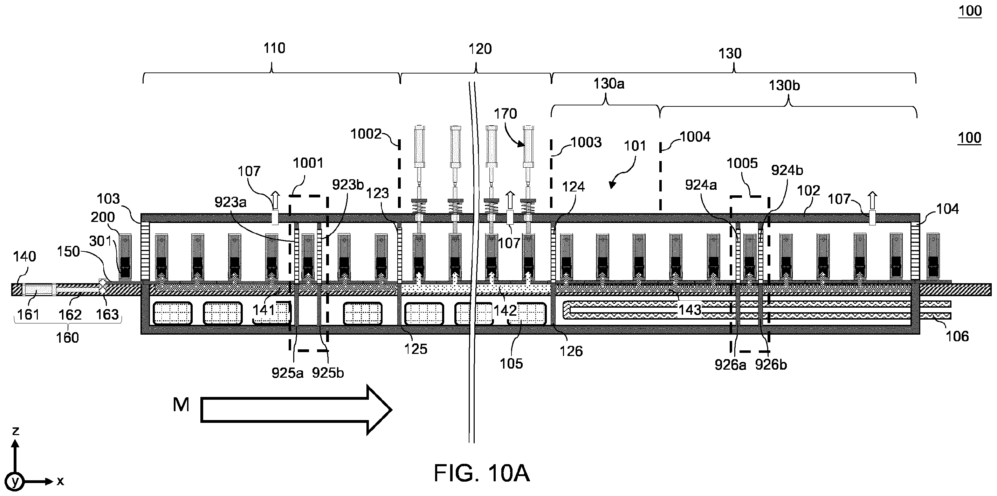

FIGS. 10A and 10B are views of the furnace 100 according to another embodiment. The furnace 100 may include a first load lock region 1001 in the warm-up region 110. In the first load lock region 1001, the temperature in the furnace 100 may be in a range from 250°C to 350°C (e.g., about 300°C). In addition, in the first load lock region 1001, the gas in the gas troughs 141 of the guide platform 140 may transition from CDA to nitrogen. The first load lock region 1001 may include two doors 923a, 923b located in two respective walls 925a, 925b to help separate the CDA and nitrogen atmospheres from each other.

The furnace 100 may include a first sintering temperature location 1002 near the sintering chamber 120 entrance door 123. At the at the first sintering temperature location 1002, the temperature in the furnace 100 may be in a range from 600°C to 1000°C. The furnace 100 may also include a second sintering temperature location 1003 near the sintering chamber exit door 124. At the at the second sintering temperature location 1003, the temperature in the furnace 100 may also be in a range from 600°C to 1000°C. The furnace 100 may also include a cool-down temperature location 1004 in the cool-down region 130. At the at the cool-down temperature location 1004, the temperature in the furnace 100 may be in a range from 400°C to 600°C.

The furnace 100 may also include a second load lock region 1005 in the cool-down region 130. In the second load lock region 1005, the temperature in the furnace 100 may be in a range from 400°C to 600°C. In addition, in the second load lock region 1005, the gas in the gas troughs 141 in the guide platform 140 may transition from nitrogen back to CDA. The second load lock region 1005 may include two doors 924a, 924b located in two respective walls 926a, 927b to help separate the CDA and nitrogen atmospheres from each other. The load lock regions 1001 and 1005 may reduce the oxygen concentration in the sintering region 120 to less than 0.005%, such as about 0.001%. The gas pressure in the sintering region 120 may be maintained at a higher level than the gas pressure in the load lock regions 1001 and 1005 to inhibit the flow of CDA from the warm-up region 110 and the cool-down region 130 into the sintering region 120. In one embodiment, only one of the load lock regions 1001, 1005 may be provided in the furnace 100.

FIG. 10B is a plan view of the furnace 100. It should be noted that only an outline of the furnace body 102 is shown in FIG. 10B for ease of understanding. In addition, the pusher assembly 160, compression assembly 170 and gas discharge ports 107 have been omitted for ease of understanding. In one embodiment, plural rows of pusher plates 150 supporting respective cages 200 may be located over the guide platform 140. For example, three rows of pusher plates 150 are shown in FIG. 10B. However, one, two or more than three rows of pusher plates may be located over the guide platform 140. All rows of pusher plates 150 may be moved in the moving direction M through the furnace at the same time. Alternatively, pusher plates may be moved asynchronously (as previously disclosed) in some embodiments to help facilitate the load lock region functionality. However, even if some air leaks through the first load lock region 1001 from the warm-up region 110 into the sintering region 120, the rate of oxidation of the stack 301 components is sufficiently slow that a slightly higher concentration of air at the exit of the first load lock region 1001 should not degrade the stack 301 yield. Furthermore, in some embodiments described herein, nitrogen is provided directly into the stacks 301 in the sintering region 120 to offset possible air leakage from warm-up region 110 into the sintering region 120.

As illustrated in FIG. 10B, the guide platform 140 may include a furnace onload area 140a. The furnace onload area 140a may extend from a first end of the guide platform 140 to the furnace body entrance door 103 (see FIG. 10A). The furnace body onload area 140a may have an ambient temperature (e.g., about 25°C). The guide platform 140 may also include a furnace offload area 140b. The furnace offload area 140b may extend from the furnace body exit door 104 (see FIG. 10A) to a second end of the guide platform 140. The furnace body offload area 140b may have an ambient temperature (e.g., about 25°C).

The cool-down region 130 of the furnace 100 may include a first cool-down subregion 130a. The first cool-down subregion 130a may extend from the second sintering temperature location 1003 to the cool-down temperature location 1004. In the first cool down subregion 130a the temperature may decrease from the sintering temperature in range from 600°C to 1000°C to a temperature in a range from 400°C to 600°C. The rate of change of temperature (dT/dt) of at least one electrochemical cell stack 301 in the first cool-down subregion 130a may be in a range from -1°C/min to -5°C/min (e.g., about -2°C/min).

The cool-down region 130 of the furnace 100 may also include a second cool-down subregion 130b. The second cool-down subregion 130b may extend from the cool-down temperature location 1004 to exit door 104 (see FIG. 10A) of the furnace body 102. The second cool-down subregion 130b may include the second load lock region 1005. In the second cool down subregion 130b, the temperature may decrease from a temperature in a range from 400°C to 600°C to ambient temperature (e.g., about 25°C). The rate of change of temperature (dT/dt) in the second cool-down subregion 130b may be less than the rate of change of temperature (dT/dt) in the first cool-down subregion 130a. In one embodiment, the rate of change of temperature (dT/dt) in the second cool-down subregion 130b may also be in a range from -1°C/min to -5°C/min (e.g., about -1°C/min).

As further illustrated in FIG. 10B, the furnace 100 may include a plurality of atmosphere sections 1010. The plurality of atmosphere sections 1010 may include a first warm-up region atmosphere section 1011 beginning at the furnace body entrance door 103 (see FIG. 10A). The first warm-up region atmosphere section 1011 may include an air atmosphere (e.g., CDA atmosphere). The plurality of atmosphere sections 1010 may also include a second warm-up region atmosphere section 1012 straddling the first load lock region 1001. The second warm-up region atmosphere section 1012 may include an atmosphere transitioning from air to nitrogen.

The plurality of atmosphere sections 1010 may also include a warm-up/sintering atmosphere section 1013 straddling the warm-up region 110 and sintering region 120. The warm-up/sintering atmosphere section 1013 may include a transitioning nitrogen atmosphere having an increasing concentration of nitrogen in the moving direction M. The plurality of atmosphere sections 1010 may also include a sintering/cool-down atmosphere section 1014 straddling the sintering region 120 and first cool-down subregion 130a. The sintering/cool-down atmosphere section 1014 may include a transitioning nitrogen atmosphere having a decreasing concentration of nitrogen in the moving direction M.

The plurality of atmosphere sections 1010 may also include a first cool-down atmosphere section 1015 straddling the first cool-down subregion 130a and the second cool-down subregion 130b. The first cool-down atmosphere section 1015 may include the cool-down temperature location 1004. The first cool-down atmosphere section 1015 may also include a transitioning nitrogen atmosphere having a decreasing concentration of nitrogen in the moving direction M.

The plurality of atmosphere sections 1010 may also include a second cool-down atmosphere section 1016 straddling the second load lock region 1005. The second cool-down atmosphere section 1016 may include an atmosphere transitioning from nitrogen to air. The plurality of atmosphere sections 1010 may also include a third cool-down atmosphere section 1017 extending from the second cool-down atmosphere section 1016 to the furnace body exit door 104 (see FIG. 10A). The third cool-down atmosphere section 1017 may include an air atmosphere.

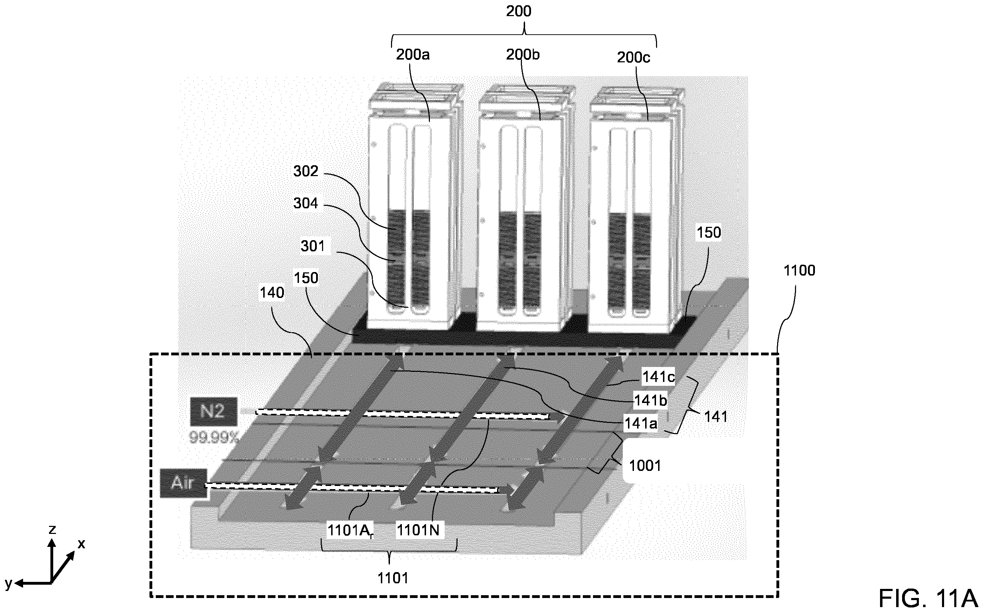

FIGS. 11A-11C are various views of the furnace 100 including a gas flow system 1100 according to one or more embodiments. In particular, FIG. 11A is a perspective view of the guide platform 140 including at least part of the gas flow system 1100 according to one or more embodiments. The guide platform 140 may include one or more inlet gas ports (not shown) that are connected to inner gas lines 1101. The inner gas lines 1101 may include one or more air inner gas lines 1101A that supplies CDA to the gas troughs 141 and one or more nitrogen inner gas lines 1101N that supply nitrogen to the gas troughs 141.

As further illustrated in FIG. 11A, a plurality of cages 200 may be aligned in the y-direction on the pusher plates 150 located on the guide platform 140. The cages may include a first cage 200a, second cage 200b and third cage 200c. The gas troughs 141 may extend along a surface of the guide platform in the moving direction M (i.e., x-direction) and include a first gas trough 141a for supplying gas to the first cage 200a, a second gas trough 141b for supplying gas to the second cage 200b and a third gas trough 141c for supplying gas to the third cage 200c.

The air inner gas lines 1101A may extend in the y-direction under the surface of the guide platform 140 and intersect each of the first gas trough 141a, second gas trough 141b and third gas trough 141c. The nitrogen inner gas lines 1101N may also extend in the y-direction under the surface of the guide platform 200 and intersect each of the first gas trough 141a, second gas trough 141b and third gas trough 141c.

The nitrogen and air may fill the first gas trough 141a, second gas trough 141b and third gas trough 141c. As indicated by the directional arrows in FIG. 11A, nitrogen gas from the nitrogen inner gas lines 1101N may flow both ways in the x-direction. That is, the nitrogen may flow toward the first load lock region 1101 and away from the first load lock region 1101. Similarly, air from the air inner gas lines 1101A may flow both ways in the x-direction. That is, the air may flow toward the first load lock region 1101 and away from the first load lock region 1101. The nitrogen and air flow through separate troughs to avoid mixing them. The CDA and nitrogen (or reducing gas) troughs are separated a stopper, plug or a similar separator, between different furnace regions.

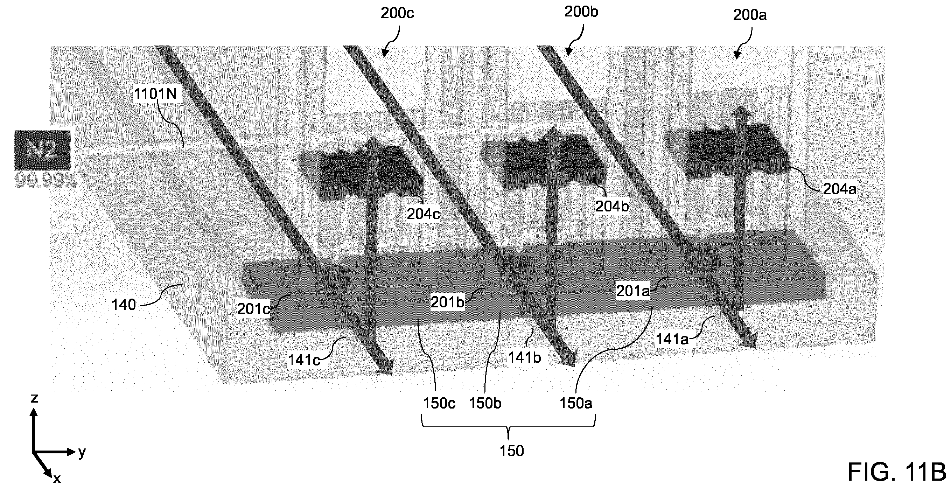

FIG. 11B is a perspective view of the guide platform 140 including the gas troughs 141 of the gas flow system 1100 of FIG. 11A. The view in FIG. 11B is from the opposite side of the cages 200 illustrated in FIG. 11A. It should be noted that the bottom electrochemical cell stack 301 and top electrochemical cell stack 302 have been omitted from FIG. 11B for ease of understanding.

As illustrated in FIG. 11B, the nitrogen in the first gas trough 141a (indicated by the directional arrow) flows under the pusher plate 150a supporting the first cage 200a. The pressure of the nitrogen in the first gas trough 141a provides the nitrogen through the pusher plate 150a and cage base plate 201a, into the bottom electrochemical cell stack 301 (not shown), through the spacer 204a and into the top electrochemical cell stack 302 (not shown). Similarly, nitrogen in the second gas trough 141b (indicated by the directional arrow) flows under the pusher plate 150b supporting the second cage 200b. The pressure of the nitrogen in the second gas trough 141b provides the nitrogen through the pusher plate 150b and cage base plate 201b, into the bottom electrochemical cell stack 301 (not shown), through the spacer 204b and into the top electrochemical cell stack 302 (not shown). Likewise, nitrogen in the third gas trough 141c (indicated by the directional arrow) flows under the pusher plate 150c supporting the third cage 200c. The pressure of the nitrogen in the third gas trough 141c provides the nitrogen through the pusher plate 150c and cage base plate 201c, into the bottom electrochemical cell stack 301 (not shown), through the spacer 204c and into the top electrochemical cell stack 302 (not shown).

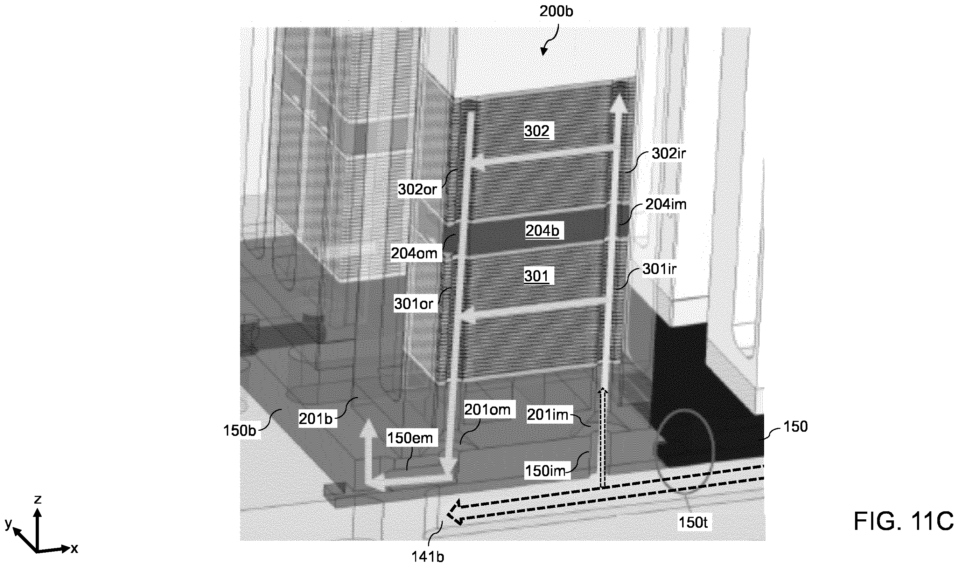

FIG. 11C is a cross-sectional view of the second cage 200b including a gas flow path of the gas flow system 1100 according an embodiment. As illustrated in FIG. 11C, the nitrogen flows in the second gas trough 141b under the pusher plate 150b. The pusher plate 150b may include one or more tabs 150t that overlap or underlap tabs on an adjoining pusher plate 150 in the moving direction M. These tabs 150t may help seal the interface between the pusher plate 150b and the adjoining pusher plate 150 over the second gas trough 141b.

As further illustrated in FIG. 11C, the nitrogen in the second gas trough 141b may be provided into the inlet manifold 150im of the pusher plate 150b, through the inlet manifold 201im of the cage base plate 201b, into the fuel inlet riser opening 301ir in the stack 301, through the inlet manifold 204im of the spacer 204b, and into the fuel inlet riser opening 302ir of the top electrochemical cell stack 302.

As further indicated by the directional arrows in FIG. 11C, the nitrogen from the fuel inlet riser opening 301ir of the bottom electrochemical cell stack 301 may flow between the individual electrochemical cells in the fuel channels of the bottom electrochemical cell stack 301, into the fuel outlet riser opening 301 or of the bottom electrochemical cell stack 301. The nitrogen from the fuel inlet riser opening 302ir of the top electrochemical cell stack 302 may flow between the individual electrochemical cells in the fuel channels of the top electrochemical cell stack 302, into the fuel outlet riser opening in the stack 302or of the top electrochemical cell stack 301, through the outlet manifold 204om of the spacer 204b and into the fuel outlet riser opening 301or of the bottom electrochemical cell stack 301. The nitrogen in the fuel outlet riser opening 301 or of the bottom electrochemical cell stack 301 may then flow into the outlet manifold 201om of the cage base plate 201b and into the exhaust manifold 150em of the pusher plate 150b where it is exhausted into the inner volume (e.g., sintering chamber 120) of the housing 102 of the furnace 100. The nitrogen then exits the housing via the gas discharge port 107 (*see* FIG. 1).

The guide platform 140 may alternatively or additionally include one or more nitrogen supply ports (not shown) in the sintering region 120. The nitrogen supply ports may be connected to the same nitrogen inner gas lines 1101N that supply nitrogen to the gas troughs 141. The nitrogen supply ports may be shutoff during the move time (e.g., while the pusher assembly 160 is activated) to maximize nitrogen flow directly into the stacks 301 during the dwell time. Alternatively, the nitrogen supply ports may be turned on during the move time if the load lock regions separate the air and nitrogen atmospheres in different regions. The nitrogen supply ports may be located underneath the pusher plates 150 in the sintering region 120. The nitrogen supply ports may be spaced every pitch length in the sintering region 120. The nitrogen supply ports may direct nitrogen upward into the gas flow path described with reference to FIG. 11C (e.g., into inlet manifold 150im then into inlet manifold 201im, and so on).

The guide platform 140 may alternatively or additionally include one or more nitrogen exhaust ports (not shown) in the sintering region 120, and a nitrogen exhaust line (not shown). The nitrogen exhaust line may be connected to a furnace exhaust line that exhausts nitrogen out of the furnace 100. The nitrogen exhaust ports may be located underneath the pusher plates 150 adjacent to the nitrogen supply ports in the sintering region 120. The nitrogen exhaust ports may also be spaced every pitch length in the sintering region 120. In this case, the exhaust manifold 150em may be designed to route the nitrogen out of the pusher plate 150 into the nitrogen exhaust ports, into the nitrogen exhaust line and into the furnace exhaust line.

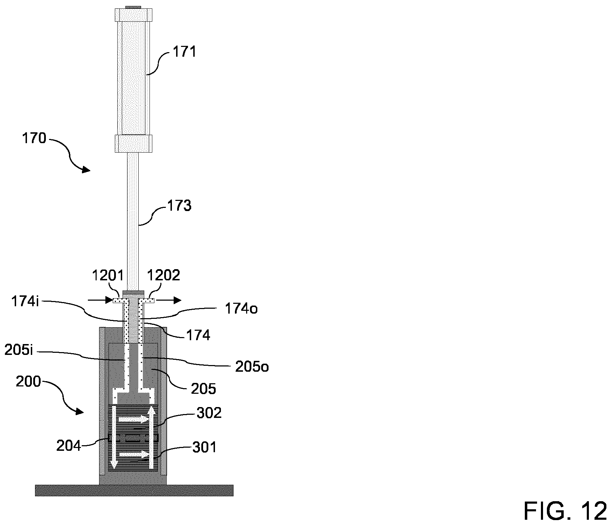

FIG. 12 is a cross-sectional view of the compression assembly 170 having an alternative design according to an alternative embodiment. As illustrated in FIG. 12, the alternative design the compression assembly 170 may include a gas flow path for flowing nitrogen into the electrochemical cell stacks (e.g., bottom electrochemical cell stack 301 and top electrochemical cell stack 302). The alternative design of the compression assembly 170 may be utilized instead of or in addition to the gas flow system illustrated in FIGS. 11A-11C.

As illustrated in FIG. 12, the compression rod 174 may include a nitrogen inlet port 1201 and a nitrogen outlet port 1202. The compression rod 174 may also include a nitrogen supply line 174i connected to the nitrogen inlet port 1201 and a nitrogen exhaust line 174o connected to the nitrogen outlet port 1202.

When the compression assembly 170 is activated, the actuator rod 173 may force the compression rod 174 to press down on the cage 200. For example, the compression rod 174 may contact the cage weight (e.g., the compression ball 206 portion of the cage weight 205) to press down on the stacks 301 located in the cage 200. The cage weight 205 may include a nitrogen inlet line 205i that interfaces with the nitrogen supply line 174i and a nitrogen outlet line 205o that interfaces with the nitrogen exhaust line 174o. A substantially air-tight contact seal may be formed between the compression rod 174 and the cage weight 205. Thus, during the dwell time while the compression rod 174 is applying the second compressive load on the cage weight 205, nitrogen may be provided from the nitrogen supply line 174i into the nitrogen inlet line 205i of the cage weight 205. During a move time, the compression rod 174 is retracted and the nitrogen supply to the nitrogen inlet port 1201 may be turned off.

As further indicated by the directional arrows in FIG. 12, nitrogen may then be provided into the top electrochemical cell stack 302 and the bottom electrochemical cell stack 301 along a gas flow path similar to the gas flow path described above with respect to FIG. 11C, except that the nitrogen first enters the top electrochemical cell stack 302 instead of the bottom electrochemical cell stack 301. The nitrogen may exit the top electrochemical cell stack 302 into the nitrogen outlet line 205o in the cage weight 205, then into the nitrogen exhaust line 174o of the compression rod 174, and then exit the compression rod 174 through the nitrogen outlet port 1202.

One exemplary method of sintering an electrochemical cell stack includes placing the electrochemical cell stack 301 in a cage 200 which applies a first compressive load to the electrochemical cell stack, moving the cage 200 containing the electrochemical cell stack 301 in a moving direction M through a furnace 100 containing a sintering region 120, sintering the electrochemical cell stack 301 in the sintering region 120 of the furnace 100, and applying a second compressive load greater than the first compressive load to the electrochemical cell stack 301 during sintering.

In an alternate embodiment, applying the second compressive load comprises intermittently applying the second compressive load with a plurality of compression rods 174 projecting into the sintering region 120.

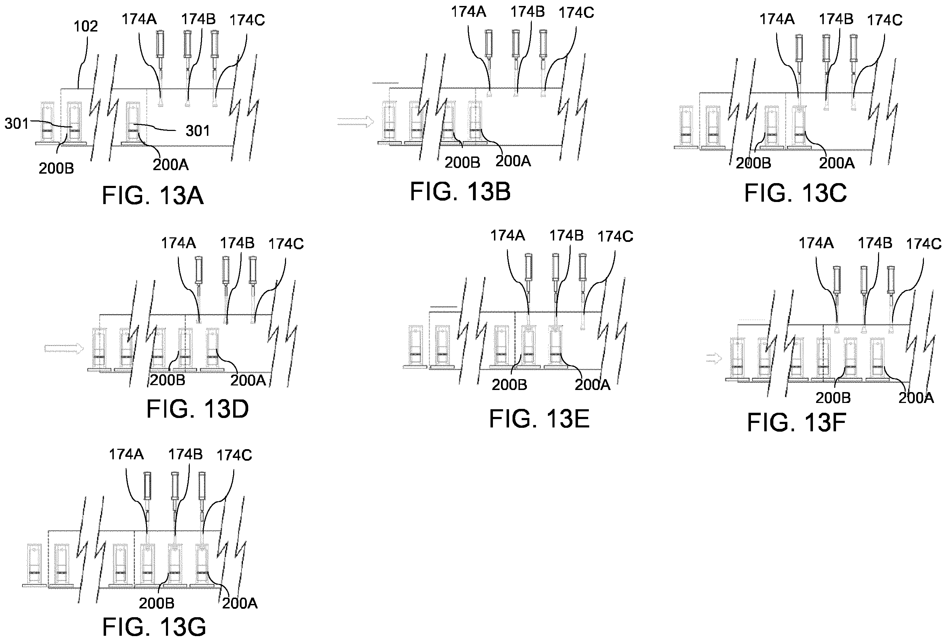

FIGS. 13A - 13G illustrate an exemplary move cycle sequence of steps in which the electrochemical cell stack 301 receives the second compressive load from each compression rod 174 that the electrochemical cell stack 301 passes under in the movement direction. A first step includes moving a first cage 200A containing the electrochemical cell stack 301 from an initial position shown in FIG. 13A to a first position in the sintering region 120. The movement of the cage 200A is shown in FIG. 13B and the arrival of the cage in the first position is shown in FIG. 13C. A second step includes lowering a first compression rod 174A of the plurality of compression rods while the cage 200A is located in the first position to apply the second compressive load to the electrochemical cell stack 301 as shown in FIG. 13C. A third step includes raising the first compression rod 174 to release the second compressive load from the electrochemical cell stack and moving the cage containing the electrochemical cell stack in the movement direction, as shown in FIG. 13D to a second position in the sintering region after the raising the first compression rod, as shown in FIG. 13E. Meanwhile a second cage 200B containing another electrochemical cell stack 301A is moved into the first position. A fourth step includes lowering a second compression rod 174B of the plurality of compression rods 174 while the cage 200A is located in the second position to apply the second compressive load to the electrochemical cell stack 301. The fourth step also includes lowering the first compression rod 174A while the second cage 200B is located in the first position to apply the second compressive load to the electrochemical cell stack 301 located in the second cage 200B. A fifth step includes raising the second compression rod 174B to release the second compressive load from the electrochemical cell stack 301, and moving the cage 200A containing the electrochemical cell stack 301 in the movement direction, as shown in FIG. 13F, to a third position in the sintering region after the raising the second compression rod, as shown in FIG 13G. A sixth step includes lowering a third compression rod 174C of the plurality of compression rods 174 while the cage 200A is located in the third position to apply the second compressive load to the electrochemical cell stack 301, as shown in FIG. 13G. The second compressive loads applied by the first compression rod and the second compression rod can be equal or different from each other.

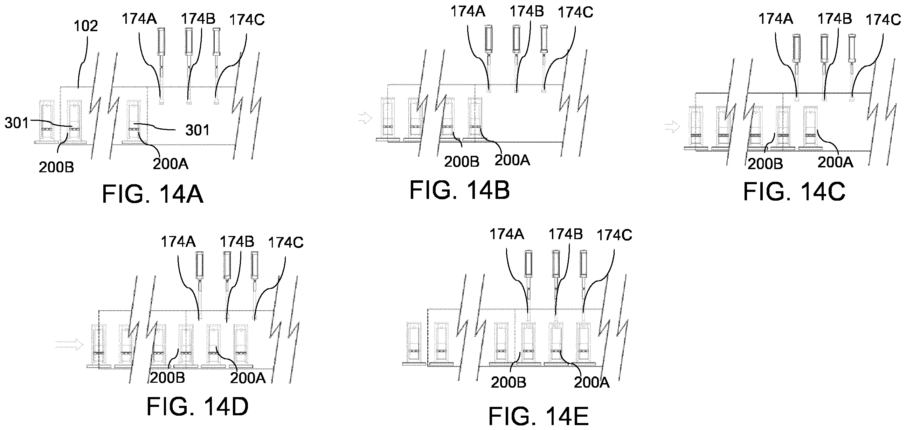

FIGS. 14A - 14E illustrate a multiple move cycle in which the electrochemical cell stack 301 receives the second compressive load from some but not all of the compression rods 174 that the electrochemical cell stack 301 passes under in the movement direction. A first step includes moving the first cage 200A containing the electrochemical cell stack 301 from an initial position shown in FIG. 14A toward a first position in the sintering region 120. The movement of the cage 200A is shown in FIG. 14B. However, in this embodiment, the first compression rod 174A is not lowered and does not apply the second compressive load to the electrochemical cell stack 301. Instead, in a second step the first cage 200A is moved from the first position to the second position, while the second cage 200B containing another electrochemical cell stack 301 is moved into the first position. The movement of the cages 200A and 200B is shown in FIG. 14C. The first and second compression rods 174A and 174B are not lowered and do not apply the second compressive load to the electrochemical cell stacks 301 located in the first and second cages 200A and 200B. Instead, in a third step, the first cage 200A is moved from the second position into the third position, the second cage 200B is moved from the first position to the second position, and a third cage 200C containing yet another electrochemical cell stack 301 is moved into the first position. The cage movement is shown in FIG. 14D. In the fourth step, the first, second and third compression rods 174A, 174B and 174C apply the second compressive load to the respective electrochemical cell stacks 301 located in the respective third, second and first cages 200C, 200B and 200A, as shown in FIG. 14E. The multiple move cycle sequence of steps permits larger electrochemical cell stack 301 batches to be processed per furnace dwell cycle, while reducing the delay in the sintering process. This permits an increase in the dwell time which may improve the quality of the sintering of the electrochemical cell stacks 301. In this embodiment, the load lock may be wider than in the single move cycle sequence of steps embodiment of FIGS. 13A- 13G to simultaneously accommodate plural cages 200 arranged in a line in the movement direction.

A sequence of steps for intermittently applying the second compressive load with the plurality of compression rods comprises moving the first cage 200A containing the first electrochemical cell stack 301 past first and second positions in the sintering region without applying the second compressive load to the first electrochemical cell stack and moving it into a third position in the sintering region, while also moving a second cage 200B containing a second electrochemical stack 301 past the first position into the second position, and also moving a third cage 200C containing a third electrochemical stack 301 into the first position. The method also comprises lowering first, second and third compression rods 174A, 174B and 174C of the plurality of compression rods 174 while the first cage 200A is located in the third position, the second cage 200B is located in the second position and the third cage 200C is located in the third position and then applying the second compressive load to the respective third, second and first electrochemical cell stacks 301. The method further comprises raising the first, second and third compression rods 174A, 174B, 174C to release the second compressive load from the respective third, second and first electrochemical cell stacks 301; and moving the first cage 200A in the movement direction past fourth and fifth positions into a sixth position in the sintering region, while also moving the second cage 200B in the movement direction into the fifth position past the fourth position, and also moving the third cage 200C into the fourth position after the raising the respective third, second and first compression rods.

During the sintering of the electrochemical cell stack, the electrochemical cell stack is heated to at least one of melt or reflow glass temperature (or glass-ceramic seal precursor material) located between the interconnects and electrochemical cells of the stack to form glass or glass-ceramic seals between each of the electrochemical cells and two adjacent interconnects in the electrochemical cell stack. The sintered stack is then removed from the cage and placed into an electrochemical cell system, such as a fuel cell system or an electrolyzer system.

The pusher assembly 160 may be referred to as an indexing conveyance system or furnace indexer. A cycle time of the furnace indexer may be referred to as an indexer cycle time. An indexer cycle may include a dwell portion during which the electrochemical cell stacks in the furnace 100 (e.g., bottom electrochemical cell stack 301 and top electrochemical cell stack 302) are stationary and a move portion during which the electrochemical cell stacks are moving (e.g., being pushed by the pusher assembly 160).

The indexer cycle time $t_{index}$ may be given as the sum of the ramp up time $t_{ramp-up}$, the dwell time $t_{dwell}$, the ramp down time $t_{ramp-down}$, and move time $t_{move}$ ($t_{index}$ = $t_{ramp-up}$ + $t_{dwell}$ + $t_{ramp-down}$ + (move-cycles * $t_{move}$)). In one embodiment, the dwell time $t_{dwell}$ may be greater (e.g., much greater) than the move time $t_{move}$. The move time refers to the required time for the cages supporting the electrochemical cell stack to move forward one pitch length (e.g., from the first position under the first compression rod 174A to the second position under the second compression rod 174B in the furnace 100). In one embodiment, the dwell time $t_{dwell}$ may be in a range of about 5 minutes to about 40 minutes (e.g., 15 to 25 minutes), whereas the move time, $t_{move}$, may only be in a range of about 5 seconds to about 100 seconds (e.g., 20 to 80 seconds). For example, the dwell time may be 5 to 10 minutes and the move time may be 20 to 30 seconds in the single move cycle sequence of steps of FIGS. 13A-13G. In contrast, the dwell time may be 15 to 25 minutes and the move time may be 70 to 80 seconds in the multiple move cycle sequence of steps of FIGS. 14A - 14E. The move time is multiplied by the number of movement cycles "move-cycles", where the movement cycles are defined as the number of times the indexer moves before compressive load is applied. For example, the number of movement cycles in the embodiment of FIGS. 13A - 13G is one, while the number of movement cycles in the embodiment of FIGS. 14A - 14E is three. The ramp up time $t_{ramp-up}$ is defined as the required time for the compressive load to reach its setpoint value from zero. The ramp down time $t_{ramp-down}$ is defined at the required time for the compressive load to reach zero from its setpoint value. An electrochemical cell stack 301 or set of stacks located in a respective cage 200 may enter and exit the furnace 100 after each indexer cycle. Plural cages 200 may enter and exit the furnace 100 if plural rows of cages 200 are supported by the guide platform 140. The electrochemical cell stacks 301 may be assembled inside the cages 200 while the cages 200 are located outside the furnace 100. The cages 200 containing the electrochemical cell stacks are then transferred via an electromechanical device (e.g., robotic arm, gantry robot, etc.) to and from the furnace 100 for every indexer cycle.

In one embodiment, the step of moving the electrochemical cell stack is performed over a plurality of cycles including the cycle ramp up time, the cycle dwell time, the cycle ramp down time, and the cycle move time. The step of applying the second compressive load is performed during the cycle ramp up time, the cycle dwell time, and the cycle ramp down time in the sintering region but not during the cycle move time. The compressive load is increased from zero to a predetermined value during the ramp up time, held at the predetermined value during the dwell time, decreased from the predetermined value to zero during the ramp down time. The step of moving the cage is performed during the move time but not during the cycle ramp up time, the cycle dwell time, and the cycle ramp down time.

An electrochemical cell stack or set of stacks located in a respective cage 200 may enter and exit the furnace 100 after each indexer cycle. Plural cages 200 may enter and exit the furnace if plural rows of cages 200 are supported by the guide platform 140. The electrochemical cell stacks may be assembled inside the cages 200 while the cages 200 are located outside the furnace 100. The cages 200 containing the electrochemical cell stacks are then transferred via an electromechanical device (e.g., robotic arm, gantry robot, etc.) to and from the furnace 100 for every indexer cycle.

The second compressive load may be applied to the electrochemical cell stacks 301, 302 incrementally in the furnace 100. The second compressive load application may be linear or non-linear. A linear variable differential transformer (LVDT) sensor may be used to measure and monitor electrochemical cell stack compression in the furnace. Electrochemical cell stacks inside the furnace 100 may have a constant mass (e.g., the first compressive load) continuously applied to the electrochemical cell stacks for low-force compression. The constant mass may consist of the weight 205, or a metal rod having an outer ceramic layer or any other loading mass. Depending on the desired compression force, the metal rod may have a height in a range from 100mm to 300mm. The metal rod may comprise a steel rod or a rod of material denser than steel (e.g. lead, tungsten, etc.).

The compression assembly 170 may include one actuator 171 per cage 200 (e.g., where the cages 200 have a 1 x 1 design (see FIG. 6B) or plural actuators 171 per cage 200 (e.g., where the cages 200 have a 3 x 1 design (see FIG. 6A)) for every pitch length in the sintering region 120. Furthermore, the actuator to cage ratio may also be modified to permit the multiple move cycle. The actuators 171 may be stationary and compression may occur through the compression rod 174 that slides through a sealing member 175 in the housing 102 of the furnace body 101. The compression rods may retract when the pusher assembly 160 (e.g., indexer) moves the electrochemical cell stacks in the furnace 100.

Each of the electrochemical cell stacks may be treated in the furnace 100 for a total of about 300 minutes to about 600 minutes. During this time, a position of the electrochemical cell stacks may change with time in a stair-step manner in which the electrochemical cell stacks repeatedly move one step in the movement direction M and then stop for the dwell time. In addition, the first compressive load may be continuously provided on each of the electrochemical cell stacks in the warm-up region 110, the sintering region 120 and the cool-down region 130, while the second compressive load is applied intermittently in the sintering region 120 only during the dwell time, but not during the move time. The total number of actuators 171 may be dependent on the dwell time $t_{dwell}$. If the dwell time is relatively long (i.e., the cage 200 spends a longer time being sintered while under load from each actuator), then there are fewer actuators per row to provide a total desired sintering time in the furnace. In contrast, if the dwell time is relatively short, then there are more actuators per row to provide the same total desired sintering time in the furnace. For example, a 20 min dwell time $t_{dwell}$ may correspond to about 12 actuators per row (48 actuators total), and 5 min dwell time $t_{dwell}$ may correspond to about 48 actuators per row (144 actuators total). In one embodiment, the furnace 100 may include an indexer cycle including a 20 minute dwell time $t_{dwell}$ and a 30 second move time $t_{move}$.

The furnace 100 may include a periodic gas flow and/or continuous gas flow. The sintering process may include a sufficient level of internal nitrogen flow (e.g., ultra-pure nitrogen (>99.9%)) to ensure oxidation does not occur inside the electrochemical cell stacks. In one embodiment, the gas troughs 141 may route nitrogen to the electrochemical cell stacks only during the dwell time or optionally during both the dwell and the move time. Alternatively or additionally, the interior of the sintering chamber 120 of the furnace 100 housing may be flooded with nitrogen. In one embodiment, the nitrogen may be preheated inside the furnace 100 before entering the electrochemical cell stacks.

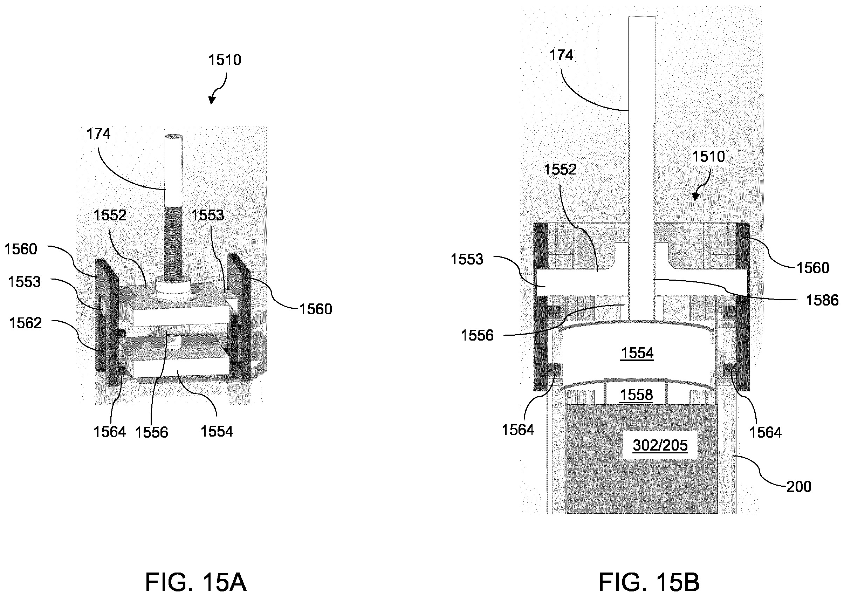

FIGS. 15A and 15B are perspective and side cross-sectional views of a stabilizing device 1510 according to an alternative embodiment of the present disclosure. The stabilizing device 1510 differs from the stabilizing devices 410 and 510 described above in that the stabilizing device 1510 may be used during both transport and sintering of the electrochemical cell stacks 301, 302.

In this alternative embodiment, the stabilizing device 1510 may comprise ceramic components which are made of a ceramic material, such as alumina, stabilized zirconia, etc., that is capable of withstanding the sintering temperature in the furnace 100. Furthermore, the stabilizing device 1510 may include the ceramic compression rod 174 described above. The compression rod 174 of this alternative embodiment may be decoupled from the actuator 171 of the compression assembly 170, as described above with respect to FIGS. 7A, 7B and 8.

The stabilizing device 1510 also includes a ceramic upper restraint plate 1552, at least one ceramic spring 1554 and a ceramic lock nut 1556. The stabilizing device 1510 may also optionally include a ceramic shim 1558. The restraint plate 1552 is supported by the upper portion of the cage 200. The restraint plate 1552 contains side protrusions 1553 which have a narrower width than the central portions of the restraint plate 1552, and which protrude through openings 1562 in the side of the cage 200.

The compression rod 174 extends through a central opening 1586 in the upper restraint plate 1552. The central opening 1586 may be internally threaded or unthreaded. The ceramic spring 1554 may comprise one or more ceramic leaf springs. In one embodiment, the ceramic spring 1554 comprises a ceramic leaf spring pack, as described in U.S. Patent No. 8,785,074 B2, issued on July 22, 2014, and incorporated herein by reference in its entirety. The ceramic lock nut 1556 comprises any suitable internally threaded ceramic nut. The compression rod 174 may be externally threaded, such that the compression rod 174 is screwed into the lock nut 1556. The lock nut 1556 prevents the compression rod 174 from rising up and out of the upper restraint plate 1552.

In this embodiment, the cage weight 205 may be provided over the top electrochemical cell stack 302. Alternatively, the cage weight 205 may be omitted. Furthermore, the compression ball 206 may also be omitted if at least one ceramic spring 1554 and/or the ceramic shim 1558 are present. The ceramic shim 1558 may comprise any suitable ceramic plate or block which is narrower than the at least one ceramic spring 1554, and which is located below the ceramic spring 1554. The shim 1558 prevents direct contact between the ceramic spring 1554 and the planar surface of the cage weight 205 or the top electrochemical cell stack 302 located below the shim 1558.

Ceramic stabilizing brackets 1560 may be provided to attach the restraint plate 1552 to the cage 200. The stabilizing brackets 1560 comprise ceramic plates which are configured to be positioned on the sides of the cage 200. Each stabilizing bracket 1560 comprises an opening 1562, such as a groove or recess, which fits over the respective side protrusion 1553 of the upper restraint plate 1552. Each stabilizing bracket 1560 also comprises at least one peg 1564 which fits into a respective opening in the cage 200. For example, each stabilizing bracket 1560 comprises four pegs 1564, as shown in FIGS. 15A and 15B.

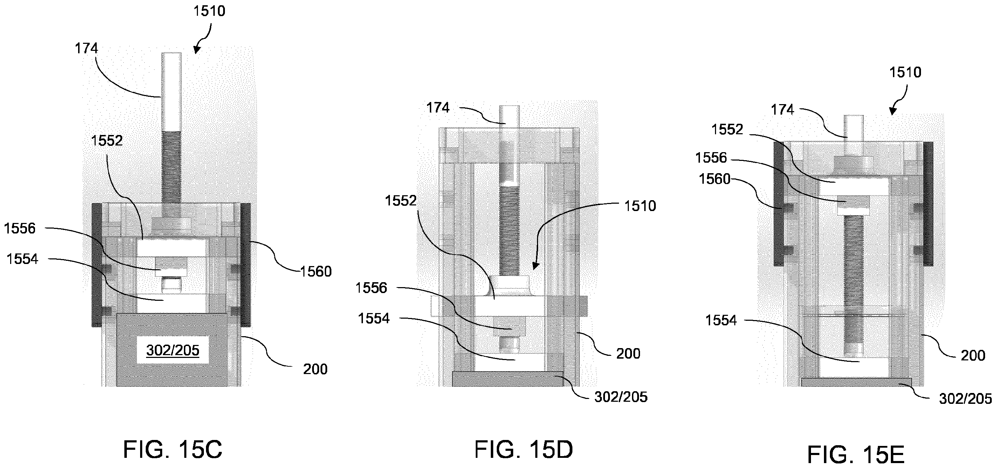

FIGS. 15C, 15D and 15E are perspective views of the cage 200 including at least one electrochemical cell stack 302 and the stabilizing device 1510 in different states according to one or more embodiments. FIG. 15C is a perspective view of the cage 200 containing at least one electrochemical cell stack 302 and the stabilizing device 1510 in an un-sintered transport state according an alternative embodiment. The stabilizing device 1510 may be attached to the cage 200 using the stabilizing brackets 1560. The respective side protrusions 1553 of the upper restraint plate 1552 are inserted into the respective openings 1562 in the respective stabilizing brackets 1560. The pegs 1564 of the stabilizing brackets 1560 are inserted into respective openings in the cage 200 to lock the stabilizing device 1510 to the cage 200. The cage 200 containing at least one electrochemical cell stack 302 and the stabilizing device 1510 is transported from the build area to the furnace 100.

FIG. 15D is a perspective view of the cage 200 and the stabilizing device 1510 in a sintering state according to an alternative embodiment. The cage 200 containing at least one electrochemical cell stack 302 and the stabilizing device 1510 is inserted into the furnace 100 without removing the stabilizing device 1510 from the cage 200. However, the stabilizing brackets 1560 may be removed prior to moving the cage 200 through the furnace 100. The actuator 171 of the compression assembly 170 compresses the compression rod 174 during the sintering step in the furnace 100, as described above with respect to FIGS. 7A, 7B and 8.

FIG. 15E is a perspective view of the cage 200 and the stabilizing device 1510 in a sintered transport state according to an alternative embodiment. Specifically, the cage 200 containing at least one sintered electrochemical stack 302 and the stabilizing device 1510 is removed from the furnace 100 and transported to the next location (e.g., an electrochemical system fabrication area or a storage area) without removing the stabilizing device 1510. The restraint plate 1552 and the lock nut 1556 may be raised relative to the at least one ceramic spring 1554 in the sintered transport state. The stabilizing brackets 1560 may be mounted on the cage 200 and the stabilizing device 1510 prior to transporting the cage 200 away from the furnace 200. The respective steps of removing and attaching the stabilizing device 1510 before and after sintering may be omitted in the alternative embodiment, thus simplifying the overall manufacturing process.

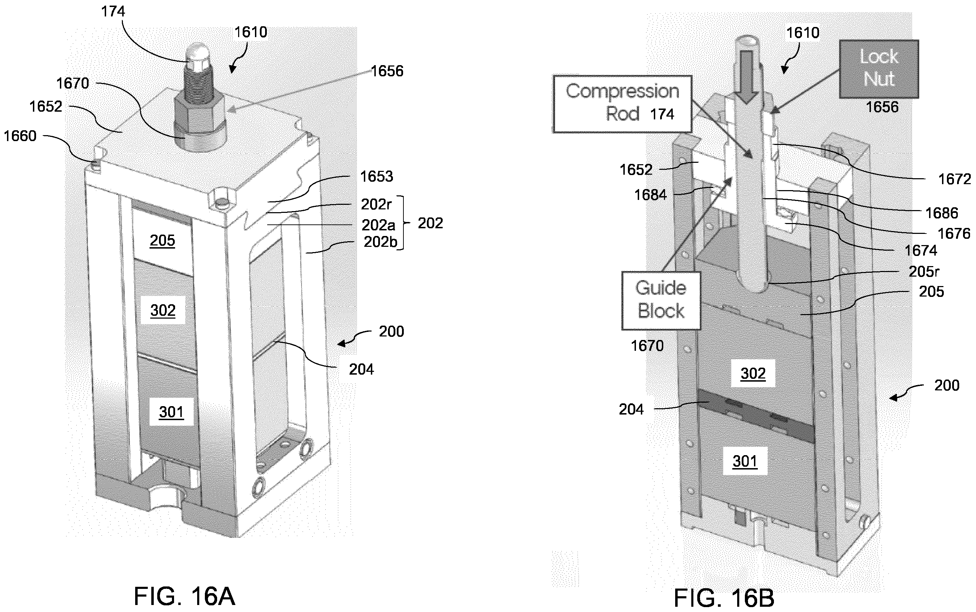

FIGS. 16A and 16B are perspective and side cross-sectional views of a cage 200 containing a stabilizing device 1610 according to another alternative embodiment of the present disclosure. The stabilizing device 1610 may be used during both transport and sintering of the electrochemical cell stacks 301, 302 in a similar manner as the stabilizing device 1510 described above with respect to FIGS. 15C - 15E. The stabilizing device 1610 differs from the stabilizing device 1510 in several different respects described below.

The stabilizing device 1610 does not require the ceramic leaf spring 1554, the optional shim 1558 or the optional stabilizing brackets 1560 described above. The stabilizing device 1610 includes the ceramic restraint plate 1652 and a ceramic lock nut 1656. The restraint plate 1652 is supported by the upper portion of the cage 200. The restraint plate 1652 contains bottom protrusions 1653 which have a narrower width than the upper portion of the restraint plate 1652, and which protrude below the upper portion of the restraint plate 1652. The bottom protrusions 1653 are inserted into recesses 202r in the top portion of the horizontal rails 202a of the cage side plates 202 to attach the stabilizing device 1610 to the cage 200. Ceramic pins 1660 may also be used to pin the restraint plate 1652 to the cage side plates 202.

The stabilizing device 1610 also includes a ceramic guide block 1670. The guide block 1670 may include a hex portion 1672, a wider lower portion 1674 and an inner threaded opening 1676 which may extend continuously through the hex portion 1672 and the lower portion 1674. The compression rod 174 extends through inner opening 1676 in the guide block 1670 to apply pressure to the cage weight 205 located below the guide block 1670. In this embodiment, the cage weight 205 includes a recess 205r which accommodates the bottom tip of the compression rod 174. Alternatively, the cage weight 205 may include the above described compression ball 206 which fits into a groove in a contact pad 176 of the compression rod 174 as described in the prior embodiments.

For application of compression loads, the compression rod 174 is threaded down by holding it in place with flats at the top and rotating the guide block 1670 until the compression rod 174 is in contact with cage weight 205. A ceramic thrust bearing 1684 allows the guide block 1670 to rotate during the application of compression loads relative to the ceramic restraint plate 1652 during this process. In this embodiment, the lock nut 1656 is located above the restraint plate 1652 and is screwed onto the outer threads of the compression rod 174. Thus, the lock nut 1656 and the lower portion 1674 of the guide block 1670 lock the compression rod against the restraint plate 1652. The restraint plate 1652 guides the guide block 1670 vertical movement at their interface 1686 during the sintering process due to the reduction height of the stacks 301 and 302.

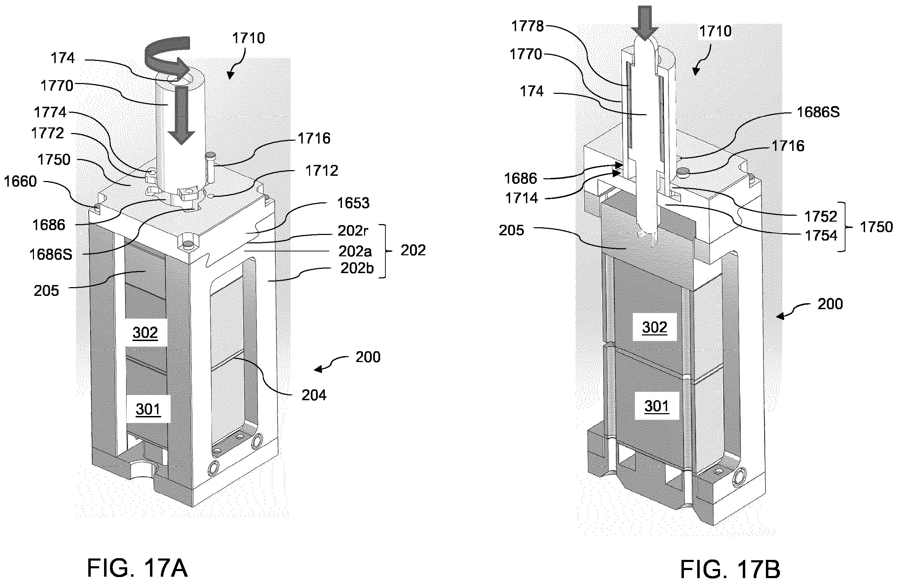

FIGS. 17A and 17B are perspective and side cross-sectional views of a cage 200 containing a stabilizing device 1710 according to yet another alternative embodiment of the present disclosure. The stabilizing device 1710 differs from the stabilizing device 1610 in several different respects described below.

The stabilizing device 1710 includes a spring housing 1770 instead of the guide block 1670 described above. The spring housing 1770 may comprise a hollow ceramic cylinder. The compression rod 174 extends through the hollow part of the spring housing 1770. A biasing member 1778 (e.g., ceramic spring) surrounds the compression rod 174 inside the spring housing 1770, similar to the biasing member 178 described above with respect to FIGS. 7A and 7B.

The spring housing 1770 also includes one or more restraint tabs 1772 located on the lower part of the outer surface of the spring housing 1770. The restraint tabs 1772 comprise ceramic protrusions which extend radially away from the outer sidewall of the spring housing 1770. At least one of the restraint tabs 1172 includes a tab opening 1774 which extends through the entire thickness of the restraint tab 1772.

In this embodiment, the top restraint block 1750 is provided instead of the restraint plate 1652. The top restraint block 1750 includes an upper plate portion 1752 and a lower plate portion 1754 separated by a groove 1714. The top restraint block 1750 also contains the above described bottom protrusions 1653 which have a narrower width than the upper plate portion 1752 of the top restraint block 1750, and which protrude below the lower plate portion 1754 of the top restraint block 1750. The bottom protrusions 1653 are inserted into recesses 202r in the top portion of the horizontal rails 202a of the cage side plates 202 to attach the stabilizing device 1710 to the cage 200.

The central opening 1686 extends through both the upper plate portion 1752 and the lower plate portion 1754 of the top restraint block 1750. The upper portion of the central opening 1686 which extends through the upper plate portion 1752 includes one or more slots 1686S that extend radially away from the center of the central opening 1686. The top restraint block 1750 also includes at least one opening 1712 extending through the entire thickness of the upper plate portion 1752 to the groove 1714.

In order to engage the stabilizing device 1710 with the electrochemical cell stacks 301, 302 located in the underlying cage 200, the spring housing 1770 and the compression rod 174 are lowered through the central opening 1686 in the top restraint block 1750 such that the compression rod 174 compresses the cage weight 205. The restraint tabs 1772 are lowered through the respective slots 1686S such that each restraint tab 1772 is located in a groove 1714 between the upper and lower plate portions of the top restraint block 1750. The spring housing 1770 is then axially rotated to rotate the tab 1772 in the groove 1714 and to align the tab opening 1774 in the tab 1772 with the opening 1712 in the upper plate portion 1752 of top restraint block 1750. A locking pin 1716 is then lowered through opening 1712 in the upper plate portion 1752 of the top restraint block 1750 and through the tab opening 1774 to secure the spring housing 1770 to the top restraint block 1750 in position over the cage 200. The bottom of the spring housing 1770 may rest on the top surface of the lower plate portion 1754.

The stabilizing device 1710 may be used during sintering of the electrochemical cell stacks 301, 302 located in the cage 200. To remove the stabilizing device 1710 from the cage 200 after sintering, the locking pin 1716 is raised, the spring housing 1770 is rotated to align the lock tabs 1772 with the slots 1686S, and the spring housing 1770 and the compression rod 174 are lifted away from the cage 200.

The method of sintering the electrochemical cell stack 301 and/or 302 of the alternative embodiments of FIGS. 15A- 15E, 16A - 16B and/or 17A - 17B includes attaching a stabilizing device 1510, 1610 or 1710 containing a compression rod 174 to the cage 200 after placing the electrochemical cell stack in the cage 200, and transporting the cage 200 containing the stabilizing device 1510, 1610 or 1710 and the electrochemical cell stack 301 and/or 302 to the furnace 100. The method also includes lowering the compression rod 174 towards the electrochemical cell stack 301, 302 in the sintering region 120 using an actuator 171 located outside the furnace 100 and removably coupled to the compression rod 174 to apply the second compressive load to the electrochemical cell stack 301, 302 during the sintering. The method also includes transporting the cage 200 containing the stabilizing device 1510, 1610 or 1710 and the electrochemical cell stack 301, 302 away from the furnace 100 (e.g., to another location, such as a storage area or a system build area). The stabilizing device is not removed from the cage during and between the two transporting and sintering steps.

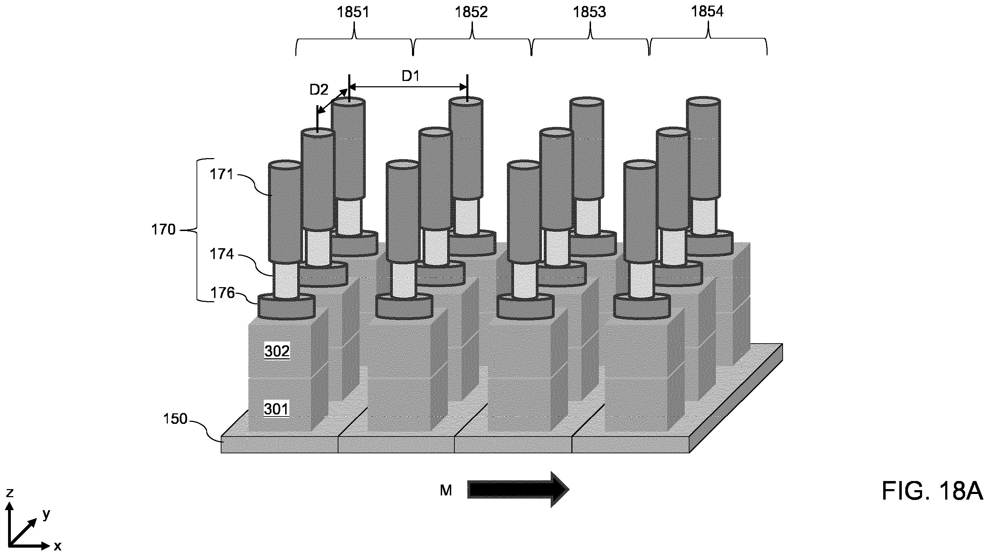

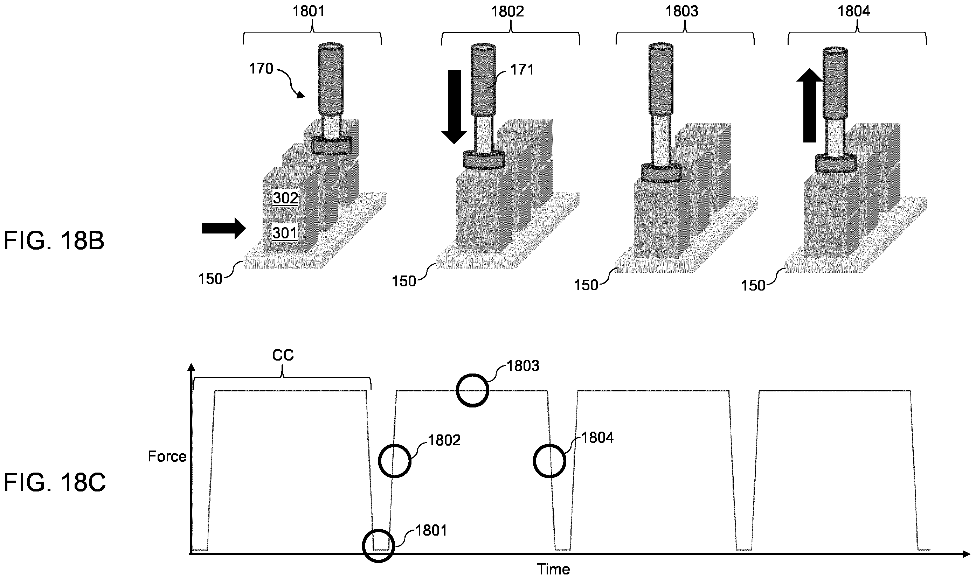

FIGS. 18A-18C illustrate a method of periodic compression in the furnace 100 according to one or more embodiments. In particular, FIG. 18A is a schematic perspective view of an arrangement of compression assemblies 170 in the sintering region 120 of the furnace 100 according to another embodiment. FIG. 18B is a schematic perspective view of the steps of the compression cycle (CC) according the embodiment of FIG. 18A. FIG. 18C is a graph illustrating a level of force applied to a column of electrochemical cell stacks 301, 302 during the stages of the compression cycle (CC) in the embodiment of FIGS. 18A and 18B. It should be noted that in FIGS. 18A and 18B, the compression assembly 170 is shown in simplified form and the cage 200 and the various elements of the furnace 100 have been omitted for ease of illustration.

Referring to FIG. 18A, the sintering region 120 of the furnace 100 may include four compression stations 1851-1854 that accommodate four pusher plates 150, with each pusher plate 150 supporting a row of plural (e.g., two or more, such as two to six, for example three) columns of electrochemical cell stacks 301, 302. More or fewer pusher plates 150 may be accommodated in the sintering region 120. The pusher plates 150 may contact each other as they are pushed in the moving direction (M) into and out of the sintering region 120.

The sintering region 120 may include a row of plural compression assemblies 170. The number of compression assemblies 170 in each row equals the number of columns of electrochemical cell stacks 301, 302 supported on the pusher plate 150. For example, there may be two or more, such as two to six, for example three compression assemblies 170 in each of the compression stations 1851-1854 of the sintering region 120. In FIG. 18A, the compression assemblies 170 are shown in an engaged state. The compression assembly 170 may include the actuator 171 (e.g., pneumatic actuator) located outside the furnace 100, the compression rod 174 that may be driven by the actuator 171 into and out of the furnace housing 102, and the contact pad 176 at the end of the compression rod 174 for applying pressure to the column of electrochemical cell stacks 301, 302.

A spacing of the actuators 171 of the compression assemblies 170 may correspond to a spacing of the columns of electrochemical cell stacks 301, 302 in the sintering region 120. In one embodiment, the actuators 171 may be evenly spaced in the sintering region 120. In particular, the actuators 171 may be separated by a first distance D1 in the x-direction (e.g., the moving direction (M)) and by a second distance D2 in the y-direction corresponding the separation distances between the columns of electrochemical cell stacks 301, 302.

Referring again to FIGS. 18B and 18C, the compression assemblies 170 may perform periodic compression of the electrochemical cell stacks 301, 302 in the sintering region 120. The periodic compression cycle may include four stages (e.g., steps): a movement period 1801, a force ramp up 1802, a dwell period 1803 and a force ramp down 1804. It should be noted that in FIG. 18B only one pusher plate 150 and only one compression assembly 170 is shown in each of the stages for ease of illustration. The four stages of the compression cycle may be performed by all of the compression assemblies 170 in the sintering region 120 simultaneously.

The graph in FIG. 18C illustrates the force applied by the compression assemblies 170 on the electrochemical cell stacks 301, 302 over time for four compression cycles. In the movement period 1801, the pusher plate 150 supporting the columns of electrochemical cell stacks 301, 302 may be moved into position under the respective compression assemblies 170. In the force ramp up 1802, while the electrochemical cell stacks 301, 302 are stationary (e.g., the pusher plates 150 are stationary), the actuator 171 of the compression assembly 170 may be lowered relatively quickly with a relatively low force until direct or indirect contact is made with the columns (e.g., a direct contact with the columns or an indirect contact through elements located on the columns, such as the compression balls 206 described above, etc.). Once the direct or indirect contact with the columns is confirmed, the compressive force is increased as a function of time until a maximum force value is reached to apply a high compressive load. In the dwell period 1803 (e.g., wait period), the compression assembly 170 may apply a substantially constant compressive force (e.g., the high compressive load) on the column of electrochemical cell stacks 301, 302. In the force ramp down 1804 after the dwell period 1803 is complete, the actuator 171 may decrease the compressive force on the column of the electrochemical cells stacks 301, 302 over time by retracting the compression rod 174 upward. At the end of the force ramp down 1804, no compressive force is applied by the compression assembly 170 to the electrochemical cell stacks 301, 302. The time corresponding to ramp up curve 1802 may be different than the time corresponding to the ramp down curve 1804. For instance, the ramp down curve 1804 may be shorter in time than the ramp up curve 1802.

In one embodiment, the pusher plates 150 may be advanced into and out of the sintering region 120 by one pusher plate 150 per compression cycle. In this case, the furnace 100 may be designed so that the total number of actuators 171 multiplied by the length of the dwell period will equal the total required sintering time. Thus, for example, the four rows of pusher plates 150 in FIG. 18A may be advanced one at a time into the sintering region 120 so that each pusher plate 150 may be subjected to four consecutive compression cycles (CC), as illustrated in FIG. 18C. In this case, a duration of the compression cycle CC may be substantially equal to 1/4 of the total required sintering time. In one embodiment, the total sintering time may be in a range from 1 hour to 4 hours.

In an alternative embodiment, a plurality of the pusher plates 150 may be advanced into and out of the sintering region 120 of the furnace 100 during each compression cycle (CC). In this case, the duration of each compression cycle (CC) may be substantially the same as the total required sintering time for the electrochemical cell stacks 301, 302. For example, the four pusher plates 150 in FIG. 18A may be advanced together into the sintering region 120. One compression cycle CC may then be executed lasting the entirety of the required sintering time. The four pusher plates 150 may then be advanced together out of the sintering region 120.

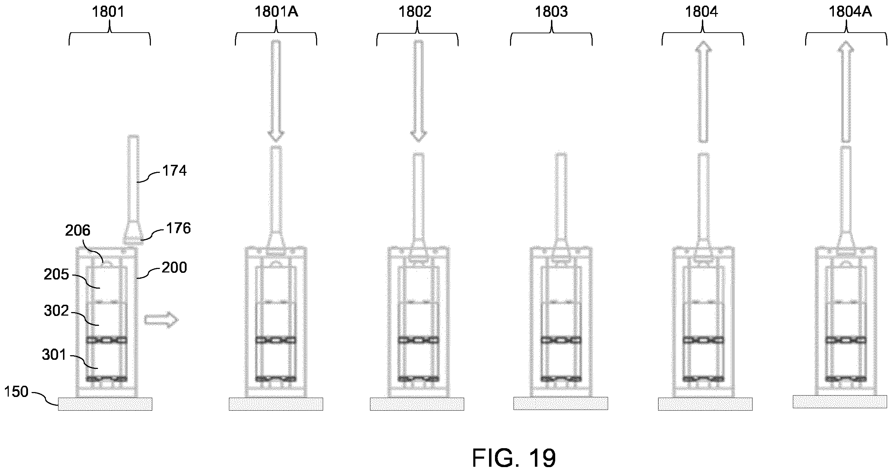

FIG. 19 illustrates additional details of the stages of a compression cycle (CC), according to an embodiment of the present disclosure. A low initial contact force is applied to the compression rod 174 while the compression rod is lowered and directly or indirectly contacts the column of electrochemical cell stacks 301, 302 (i.e., directly contacts the column or indirectly contacts the column via the compression ball 206), followed by increasing the compression force on the compression rod 174, after it is determined that the compression rod 174 made the proper direct or indirect contact with the column of electrochemical cells stacks 301, 302 (e.g., that the compression rod 174 has contacted the compression ball 206 on top of the column of electrochemical cell stacks 301, 302).

The compression cycle (CC) in FIG. 19 may be substantially similar to the compression cycle in FIGS. 18B and 18C. The compression cycle may include the movement period 1801, the force ramp up 1802, the dwell period 1803 and the force ramp down 1804 shown in FIGS. 18B and 18C. However, FIG. 19 additionally illustrates a "soft touch" step 1801A and a compression rod raise step 1804A.

During the movement period 1801 (i.e., a movement phase), the cage 200 on the pusher plate 150 is moved to the next compression station. During the force ramp up 1802 (i.e., a compression ramp up) 1802, the contact pad 176 on the compression rod 174 may be confirmed to be in contact with the compression ball 206 (i.e., an alignment ball) and the force can increase at the ramp up rate set by the compression profile, as shown in FIG. 18C. During the dwell period 1803 (compression hold), the compression assembly 170 may hold the setpoint compression load. During the force ramp down 1804 (i.e., a compression ramp down), the compression assembly 170 may decrease the compression load at the ramp down rate set by the compression profile. During the compression rod raise step 1804A, the compression rod 174 may be removed from the compression ball 206. In the compression rod raise step 1804A, there may be no limit on the speed in which the compression rod 174 is raised by the actuator 171 and no limit to the force exerted by the actuator 171 on the compression rod 174.

Impacting the compression ball 206 (or the cage weight 205 if the compression ball 206 is omitted) at a high force may cause a crack in an electrochemical cell of the electrochemical cell stacks 301, 302. The soft touch step 1801A may be included between the movement period 1801 and the force ramp up 1802 to mitigate the risk of cracking an electrochemical cell caused by a high impact force. In the soft touch step 1801A, the contact pad 176 of the compression assembly 170 may be brought gently into contact with the compression ball 206 at a low impact force. In particular, in the soft touch step 1801A, the actuator 171 may drive the compression rod 174 down at a relatively high velocity but low force descent so that the contact pad 176 gently contacts the compression ball 206. For example, the force during the soft touch step 1801A may range from 1 to 100 pounds of force, while the force during the dwell time 1803 may range from 300 to 600 pounds of force.

The extra time required to ensure a low impact force by the compression rod on the electrochemical cell stacks 301, 302 during the soft touch step 1801A may be referred to a soft touch time $t_{st}$. In the compression cycle (CC) of FIG. 19, the index time $t_i$ (e.g., process time for one pusher plate 150 to complete a CC) depends on the total sintering time needed to sinter the stacks. Taking into consideration the soft touch time $t_{st}$, the index time $t_i$ may be given by the following:

$$t_i = t_m + \left( t_{st} + t_{ru} + t_c + t_{rd} + t_{rr} \right)$$

where $t_m$ is the move time (e.g., the time for the pusher plates 150 to move forward 1 position) during stage 1801, $t_{ru}$ is the ramp up time (e.g., the time required for the compression assembly 170 to exert the full compression load) during stage 1802, $t_c$ is the compression time (e.g., the time during which the static full compression load is applied to the electrochemical cell stacks 301, 302) during stage 1803, $t_{rd}$ is the ramp down time (e.g., the time required for the compression assembly 170 to reduce the full compression load to zero compression load) during stage 1804, and $t_{rr}$ is the rod return time (e.g., the time required for the compression rod 174 to return to a position where it will not interfere with motion of the cage 200 in step 1804A).

The manner in which soft touch time $t_{st}$ is determined may be based on the process control method used in the sintering operation. In particular, with open loop control, soft touch time $t_{st}$ may be a constant time that ensures that only a low impact force is provided. With a velocity feedback control, soft touch time $t_{st}$ may be determined by a reduction in a measured compression rod velocity which denotes contact with the compression ball 206. With a force feedback control, soft touch time $t_{st}$ may be determined by a force sensor indicating compression rod contact with the compression ball 206.

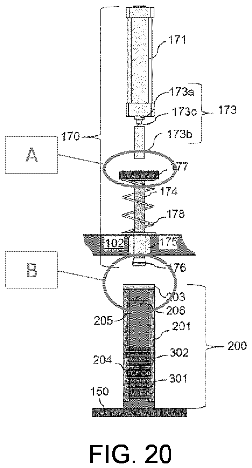

FIG. 20 illustrates potential alignment challenges associated with the compression assembly 170 according to a comparative embodiment. In the sintering region 120 of the furnace 100, there may be a risk of misalignment both within the compression assembly 170 and between the compression assembly 170 and the cage 200. Misalignment may be caused by several factors, such as variation in size or design of one or more elements in the furnace 100, movement of the furnace housing 102 due to thermal expansion, and so on.

A first misalignment risk (A) and a second misalignment risk (B) are shown in FIG. 20. The first misalignment risk (A) may include misalignment between the actuator rod 173 (e.g., the lower rod portion 173b of the actuator rod 173) and the compression rod 174 (e.g., the contact plate 177 on the compression rod 174). The first misalignment risk (A) may be due to movement of the compression rod 174 with the furnace 100 as the furnace 100 expands from heating. In particular, thermal expansion of the furnace housing 102 may cause a shift in the location of the opening in the furnace housing 102 in which the compression rod 174 of the compression assembly 170 may slide back and forth during the compression cycle (CC). The first misalignment risk (A) may also be due to installation variation between actuator rod 173 and the compression rod 174, or due to part size variation (e.g., a size of the contact plate 177 and/or a size of the lower rod portion 174b may vary from a design size).

The second misalignment risk (B) may include misalignment between the compression rod 174 (e.g., contact pad 176 on the compression rod 174) and the compression ball 206 (or the cage weight 205 if the compression ball 206 is omitted). The second misalignment risk (B) may be due to a variation in a position of the pusher plate 150 with each push from the pusher assembly 160 (see FIG. 1) (e.g., the pusher plate 150 may stop in a different place after each indexing move). The second misalignment risk (B) may also be due to part size variation.

One or more methods may be used to mitigate the risk of misalignment in the furnace 100. For example, the actuator 171 of the compression assembly 170 may be mounted on a compliant mount (e.g., movable linear stage 800) as shown in FIG. 8. This may allow the actuator 171 to move with the hole in the furnace housing 102 during thermal expansion. The compression ball 206 may also help to mitigate the risk of misalignment by allowing only a vertical component of the force from the compression rod 174 to be transmitted to the electrochemical cell stacks 301, 302.

In addition to methods of mitigating the risk of misalignment, the furnace 100 may also include one or more mechanisms for detecting misalignment and/or measuring a degree of misalignment, which may then be remedied by the furnace operator based on the measured data. In one embodiment, active electronic position sensing may be used to detect an alignment of the compression rod 174 with the top of the electrochemical cell stacks 301, 302 in the cage 200. Position sensing may be carried out in the sintering region 120 of the furnace 100 using an alignment device, such as a capacitive displacement sensor or a laser interferometer sensor which includes an optical detector (e.g., a camera). Other types of position sensing are within the contemplated scope of disclosure.

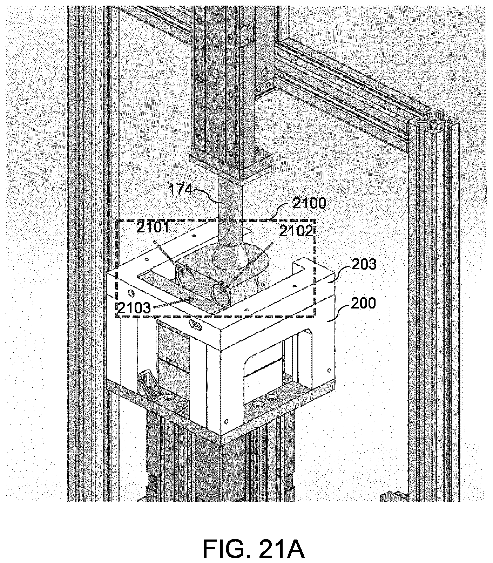

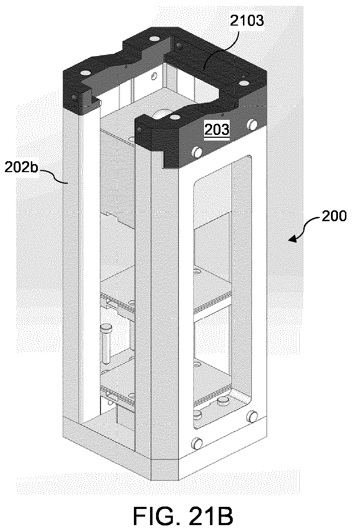

FIGS. 21A and 21B illustrate the capacitive displacement sensor 2100 for detecting misalignment and/or measuring a degree of misalignment according to an embodiment. The sensor 2100 includes at least one capacitive probe 2101, or preferably two probes 2101 and 2102, mounted to the compression rod 174 and at least one electrically conductive element 2103 mounted to the cage 200. For example, the electrically conductive element 2103 may comprise a metal bar attached to the inner surface of the ceramic cage top plate 203.

The sensor 2100 may capacitively measure a degree of misalignment between the compression rod 174 and a center of the cage 200 by measuring a capacitance between the electrically conductive element 2103 and the probes 2101, 2102. The measured misalignment may be corrected, for example, by repositioning the actuator 171, adjusting the positioning of the pusher plates 150, adjusting the positioning of the cage 200 on the pusher plate 150, etc.

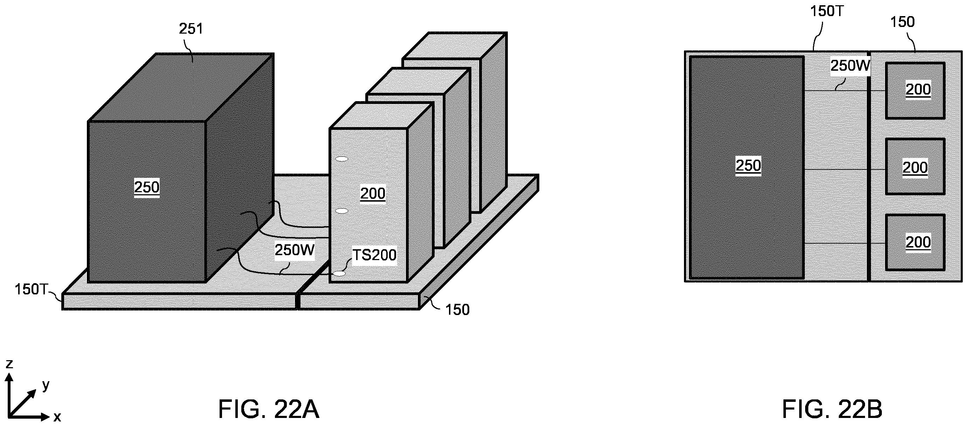

FIGS. 22A-22B are schematic illustrations of a thermal uniformity measurement tool 250 according to one or more embodiments. FIG. 22A is a perspective view of the thermal uniformity measurement tool 250 according to one or more embodiments. FIG. 22B is a top-down view of the thermal uniformity measurement tool 250 according to one or more embodiments.

The thermal uniformity measurement (TUM) tool 250 may be used during furnace 100 testing and qualification to measure the thermal uniformity of the electrochemical cell stacks 301, 302 during operation of the furnace 100. To measure thermal uniformity, the TUM tool 250 may be placed on a testing pusher plate 150T next to a pusher plate 150 supporting a row of cages 200 containing the electrochemical cell stacks 301, 302. While the furnace 100 is operating, the testing pusher plate 150T with the TUM tool 250 may be pushed through the furnace 100 along with one or more cages 200 on pusher plates 150 in order to approximate actual furnace sintering conditions. The TUM tool 250 may be connected by wiring 250W to temperature sensors TS200 (e.g., thermocouples) in or near the electrochemical cell stacks 301, 302 located in the cages 200. The temperature sensors TS200 may generate a temperature-dependent voltage representing a temperature distribution in the electrochemical cell stacks 301, 302. The TUM tool 250 may also include a thermal barrier outer casing 251 enclosing the TUM tool 250 electronics (e.g., data logger) and various sensors. The TUM tool 250 may comprise a Datapaq® Oven Tracker thermal profiling system available from Fluke Process Instruments, or another suitable thermal profiling system.

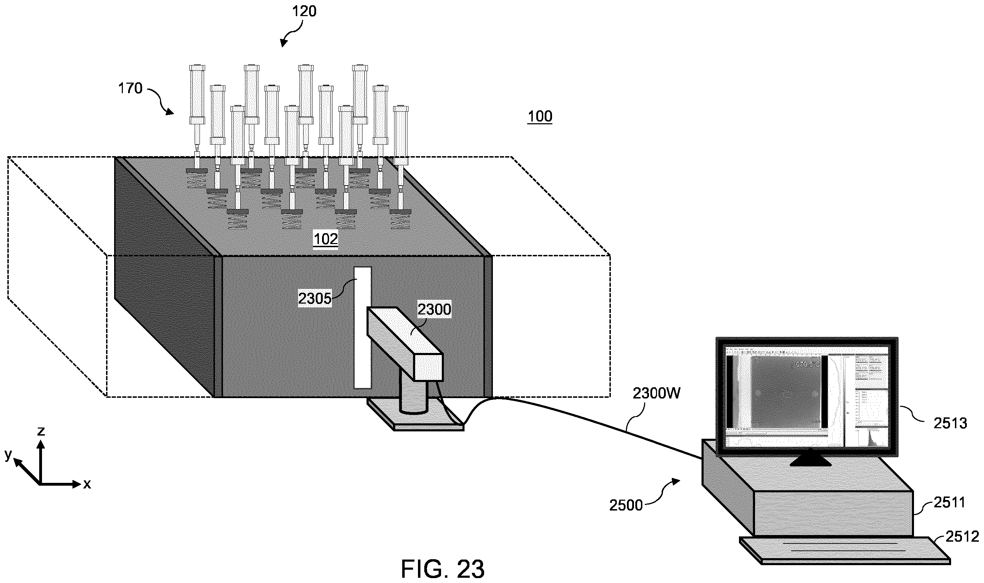

FIG. 23 is a schematic perspective view of the furnace 100 including a camera 2300 according to another embodiment of the present disclosure. As illustrated in FIG. 23, the furnace housing 102 in the sintering region 120 of furnace 100 may include one or more windows 2305. Each window 2305 may be formed, for example, of quartz or other high-temperature resistant material. The window 2305 may provide a view inside the sintering region 120 from outside the furnace 100. In particular, the window 2305 may provide a view of an operation of the compression assembly 170 inside the sintering region 120.

The window 2305 may be, for example, one or more small port holes. For thermal uniformity evaluation, one or more of the windows 2305 may be provided at every temperature zone. For alignment check, one or more of the windows 2305 may be provided at every compression station 1851-1854 shown in FIG. 18A.

The furnace 100 may also be provided with a camera 2300 (e.g., image capture device) positioned adjacent to each window 2305. Alternatively, cameras 2300 may only be present at some windows 2305. The camera 2300 may include a still camera and/or a video camera. The camera 2300 may be an infrared (IR) camera or a visible light camera for capturing images inside the sintering region 120. In particular, the camera 2300 may be an IR camera which may perform thermal imaging of the cages 200 and the electrochemical cell stacks 301, 302 in the cages 200 to determine their temperature distribution and uniformity as a function of their height and/or width.

Alternatively, the camera 2300 may comprise a visible or IR camera which performs imaging of an operation of the compression assembly 170 to ensure that the compression assembly 170 is properly aligned with electrochemical cell stacks 301, 302 (e.g., to determine whether the compression rod 174 hits the center of the stacks and/or the compression ball 206 on center of the stacks).

The camera 2300 may be connected by a wired or wireless data connection 2300W to the furnace control system 2500. The camera 2300 may produce still images and/or video images that may be converted by the computer 2511 into display signals for generating a display on the display device 2513 of the furnace control system 2500. The display may provide an operator viewing the display with images (e.g., thermal images) inside the sintering region 120. The operator may then use the input device 2512 of the furnace control system 2500 (or, alternatively, the display device 2513 if it comprises a touch screen) to control an operation of the furnace based on the images.

The preceding description of the disclosed embodiments is provided to enable any person skilled in the art to make or use the described embodiment. Various modifications to these embodiments will be readily apparent to those skilled in the art, and the generic principles defined herein may be applied to other embodiments without departing from the scope of the disclosure. Thus, the present invention is not intended to be limited to the embodiments shown herein but is to be accorded the widest scope consistent with the following claims and the principles and novel features disclosed herein.

## Claims

1. A method of sintering an electrochemical cell stack, comprising:

    placing the electrochemical cell stack in a cage which applies a first compressive load to the electrochemical cell stack;
    moving the cage containing the electrochemical cell stack in a moving direction through a furnace comprising a sintering region;
    sintering the electrochemical cell stack in the sintering region of the furnace; and
    applying a second compressive load greater than the first compressive load to the electrochemical cell stack during the sintering.

2. The method of claim 1, wherein:

    the moving the cage containing the electrochemical cell stack is performed over a plurality of cycles including a cycle ramp up time, a cycle dwell time, a cycle ramp down time, and a cycle move time;
    the applying the second compressive load is performed at least during the cycle dwell time in the sintering region but not during the cycle move time, wherein the compressive load is increased from zero to a predetermined value, held at the predetermined value, and decreased from the predetermined value to zero;
    the moving the cage is performed during the move time but not during the cycle ramp up time, the cycle dwell time, and the cycle ramp down time;
    the applying the second compressive load is performed during the cycle ramp up time, the cycle dwell time, and during the cycle ramp down time, wherein the compressive load is increased from zero to a predetermined value during the ramp up time, held at the predetermined value during the dwell time, and decreased from the predetermined value to zero during the ramp down time.

3. The method of claim 1, wherein the applying the second compressive load comprises intermittently applying the second compressive load with a plurality of compression rods projecting into the sintering region.

4. The method of claim 3, wherein the intermittently applying the second compressive load with the plurality of compression rods comprises:

    moving the cage containing the electrochemical cell stack to a first position in the sintering region;
    lowering at least a first compression rod of the plurality of compression rods while the cage is located in the first position to apply the second compressive load to the electrochemical cell stack in the cage;
    raising the first compression rod to release the second compressive load from the electrochemical cell stack;
    moving the cage containing the electrochemical cell stack in the movement direction to a second position in the sintering region after the raising the first compression rod;
    lowering at least a second compression rod of the plurality of compression rods while the cage is located in the second position to apply the second compressive load to the electrochemical cell stack in the cage;
    raising the second compression rod to release the second compressive load from the electrochemical cell stack; and
    moving the cage containing the electrochemical cell stack in the movement direction to a third position in the sintering region after the raising the second compression rod.

5. The method of claim 4, wherein:

the sintering region of the furnace comprises an opening sealed with a sealing member configured to move laterally to accommodate thermal expansion of the furnace, and the applying the second compressive load comprises forcing a portion of the first compression rod through the sealing member into the sintering region;

the applying the second compressive load comprises forcing a portion of the first compression rod into the sintering region with an actuator located outside the furnace and removably coupled to the first compression rod;

the first compression rod comprises a spring-loaded compression rod biased by a spring to be in a retracted state, and the applying of the second compressive load comprises forcing a portion of the first compression rod into the sintering region against a bias of the spring with the actuator; and

the actuator comprises a pneumatic actuator mounted on a linear stage, and the applying of the second compressive load comprises moving the linear stage to accommodate for thermal expansion of the furnace, or the actuator is fixed in position relative to the furnace and the first compression rod comprises a contact plate configured to accommodate thermal expansion of the furnace, wherein the applying of the second compressive load comprises contacting the contacting plate with the actuator.

6. The method of claim 3, wherein:

the cage containing the electrochemical cell stack comprises a first cage, and the electrochemical cell stack comprises a first electrochemical cell stack; and

the intermittently applying the second compressive load with the plurality of compression rods comprises:

moving the first cage containing the first electrochemical cell stack into a third position in the sintering region past first and second positions in the sintering region without applying the second compressive load to the first electrochemical cell stack, while also moving a second cage containing a second electrochemical stack past the first position into the second position, and also moving a third cage containing a third electrochemical stack into the first position;

lowering first, second and third compression rods of the plurality of compression rods while the first cage is located in the third position, the second cage is located in the second position and the third cage is located in the third position to apply the second compressive load to the respective third, second and first electrochemical cell stacks;

raising the first, second and third compression rods to release the second compressive load from the respective third, second and first electrochemical cell stacks; and

moving the first cage in the movement direction past fourth and fifth positions into a sixth position in the sintering region, while also moving the second cage in the movement direction into the fifth position past the fourth position, and also moving the third cage into the fourth position after the raising the respective third, second and first compression rods.

7. The method of claim 1, further comprising:

before sintering the electrochemical cell stack, gradually increasing a temperature of the electrochemical cell stack in a warm-up region of the furnace where the temperature gradually increases with distance in the moving direction; and

after sintering the electrochemical cell stack, gradually decreasing a temperature of the electrochemical cell stack in a cool-down region of the furnace where the temperature gradually decreases with distance in the moving direction.

8. The method of claim 7, further comprising:

flowing compressed dry air (CDA) through or over the electrochemical cell stack in the warm-up region and in the cool-down region; and

flowing nitrogen or forming gas through the electrochemical cell stack in the sintering region, wherein:

the moving the cage comprises pushing the cage on a pusher plate through the furnace using an external actuator;

the flowing the CDA comprises flowing the CDA into the electrochemical cell stack through a manifold in the pusher plate;

the flowing the nitrogen or forming gas comprises flowing the nitrogen or forming gas into the electrochemical cell stack through the manifold in the pusher plate;

the sintering region comprises a sintering chamber including a first door through which the electrochemical cell stack enters the sintering chamber from the warm-up region, and a second door through which the electrochemical cell stack exits the sintering chamber into the cool-down region; and

the flowing the nitrogen or forming gas into the sintering region further comprises maintaining a nitrogen-rich environment in the sintering chamber during the sintering of the electrochemical cell stack.

9. The method of claim 1, wherein:

the electrochemical cell stack comprises an alternating stack of interconnects and electrochemical cells;
the electrochemical cells comprise fuel cells or electrolyzer cells; and
the sintering the electrochemical cell stack comprises heating the electrochemical cell stack to a temperature of at least one of melt or reflow glass or glass-ceramic seal precursor material to form glass or glass-ceramic seals between each of the electrochemical cells and two adjacent interconnects in the electrochemical cell stack.

10. The method of claim 1, further comprising:

attaching a stabilizing device containing a compression rod to the cage after placing the electrochemical cell stack in the cage;
transporting the cage containing the stabilizing device and the electrochemical cell stack to the furnace;
lowering the compression rod towards the electrochemical cell stack in the sintering region using an actuator located outside the furnace and removably coupled to the compression rod to apply the second compressive load to the electrochemical cell stack during the sintering; and
transporting the cage containing the stabilizing device and the electrochemical cell stack away from the furnace.

11. The method of claim 4, wherein the step of lowering at least the first compression rod comprises lowering the first compression rod with a first force until it directly or indirectly contacts the electrochemical cell stack in the cage, followed by increasing the force applied by the first compression rod to the electrochemical cell stack after the first compression rod directly or indirectly contacts the electrochemical cell stack.

12. The method of claim 4, further comprising at least one of measuring a displacement of the first compression rod relative to a center of the cage using a camera or a capacitive displacement sensor, or measuring a temperature distribution of the electrochemical cell stack located in the furnace using an infrared camera positioned outside the furnace adjacent to a window in the furnace.

13. The method claim 1, further comprising testing the furnace by performing a thermal uniformity measurement of the electrochemical cell stack in the cage in the furnace using a thermal uniformity tool that is electrically connected to at least one thermocouple located in or adjacent to the electrochemical cell stack.

14. A furnace, comprising:

a furnace body including a sintering region;
a pusher assembly configured to push a cage containing an electrochemical cell stack to be sintered in the furnace body, wherein the cage is configured to apply a first compressive load to the electrochemical cell stack; and
a compression assembly located in the sintering region of the furnace body and configured to apply a second compressive load greater than the first compressive load to the electrochemical cell stack.

15. The furnace of claim 14, wherein the compression assembly comprises:

sealing members configured to seal respective openings in the sintering region of the furnace body;
a plurality of compression rods projecting through the respective sealing members into the sintering region; and
a plurality of actuators located outside the furnace body and removably coupled to the respective plurality of compression rods; and
further comprising:

a guide platform including a gas trough configured to transport gas;
a pusher plate configured to transport the cage containing the electrochemical cell stack by sliding along a surface of the guide platform, wherein the pusher plate comprises a pusher plate manifold aligned with the gas trough and with an anode inlet of the electrochemical cell stack and configured to flow gas from the gas trough into the anode inlet of the electrochemical cell stack;
at least one load lock region located in a path between an entrance to the furnace body and the sintering region;
at least one load lock region located in a path between the sintering region and an exit from the furnace body; and
a plurality of heating regions in the furnace body, wherein a portion of the plurality of heating regions are configured to gradually increase the temperature of the electrochemical cell stack as it moves towards the sintering region, a portion of the plurality of heating regions are configured to maintain the temperature of the electrochemical cell stack within a predetermined temperature range in the sintering region, and a portion of the plurality of heating regions are configured to gradually reduce the temperature of the electrochemical cell stack as it moves away from the sintering region.

FIG. 1

EP 4 567 945 A1

FIG. 2A

FIG. 2B

EP 4 567 945 A1

FIG. 3A          FIG. 3B          FIG. 3C          FIG. 3D

EP 4 567 945 A1

31

FIG. 4A    FIG. 4B    FIG. 4C

FIG. 5A

FIG. 5B

FIG. 5C

FIG. 5D

FIG. 5E

EP 4 567 945 A1

FIG. 6B

FIG. 6A

EP 4 567 945 A1

FIG. 7B

FIG. 7A

35

FIG. 8

FIG. 9A

FIG. 9B

FIG. 10A

EP 4 567 945 A1

FIG. 10B

FIG. 11A

FIG. 11B

FIG. 11C

FIG. 12

FIG. 13A

FIG. 13B

FIG. 13C

FIG. 13D

FIG. 13E

FIG. 13F

FIG. 13G

FIG. 14A

FIG. 14B

FIG. 14C

FIG. 14D

FIG. 14E

EP 4 567 945 A1

FIG. 15B

FIG. 15A

FIG. 15C

FIG. 15D

FIG. 15E

EP 4 567 945 A1

FIG. 16A

FIG. 16B

EP 4 567 945 A1

FIG. 17B

FIG. 17A

FIG. 18A

FIG. 18B

FIG. 18C

EP 4 567 945 A1

FIG. 19

EP 4 567 945 A1

FIG. 20

FIG. 21A

FIG. 21B

FIG. 22B

FIG. 22A

FIG. 23

EP 4 567 945 A1

Europäisches
Patentamt
European
Patent Office
Office européen
des brevets

# EUROPEAN SEARCH REPORT

**Application Number**

EP 24 21 8397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/255807 A1 (GOTTMANN MATTHIAS [US] ET AL) 10 September 2015 (2015-09-10) * paragraphs [0042] - [0044]; figures 5, 6 * | 1-15 | INV. H01M8/2404 |
| A | JP 2023 140335 A (COMMISSARIAT ENERGIE ATOMIQUE) 4 October 2023 (2023-10-04) * claims 1, 10; figure 5 * | 1-15 | |
| A | FR 3 127 850 A1 (COMMISSARIAT ENERGIE ATOMIQUE [FR]) 7 April 2023 (2023-04-07) * claims 1, 10 * | 1-15 | |
| A,P | & US 2024/405247 A1 (MOUGIN JULIE [FR] ET AL) 5 December 2024 (2024-12-05) * paragraphs [0041], [0071], [0106] * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 5 May 2025 | Goldbacher, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 567 945 A1

## ANNEX TO THE EUROPEAN SEARCH REPORT
## ON EUROPEAN PATENT APPLICATION NO.

EP 24 21 8397

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | | Publication date | Patent family member(s) | | Publication date |
|---|---|---|---|---|---|
| US 2015255807 | A1 | 10-09-2015 | TW | 201342701 A | 16-10-2013 |
| | | | US | 2013216927 A1 | 22-08-2013 |
| | | | US | 2015255807 A1 | 10-09-2015 |
| | | | WO | 2013123319 A1 | 22-08-2013 |
| JP 2023140335 | A | 04-10-2023 | CA | 3193086 A1 | 22-09-2023 |
| | | | DK | 4249640 T3 | 12-08-2024 |
| | | | EP | 4249640 A1 | 27-09-2023 |
| | | | ES | 2986659 T3 | 12-11-2024 |
| | | | FR | 3133947 A1 | 29-09-2023 |
| | | | JP | 2023140335 A | 04-10-2023 |
| | | | US | 2024322211 A1 | 26-09-2024 |
| FR 3127850 | A1 | 07-04-2023 | CA | 3233798 A1 | 13-04-2023 |
| | | | EP | 4413626 A1 | 14-08-2024 |
| | | | FR | 3127850 A1 | 07-04-2023 |
| | | | JP | 2024535516 A | 30-09-2024 |
| | | | US | 2024405247 A1 | 05-12-2024 |
| | | | WO | 2023057720 A1 | 13-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8785074 B2